(19) Europäisches Patentamt
European Patent Office
Office européen des brevets

(11) **EP 4 264 826 B1**

(12) **EUROPÄISCHE PATENTSCHRIFT**

(45) Veröffentlichungstag und Bekanntmachung des Hinweises auf die Patenterteilung:
**19.02.2025   Patentblatt 2025/08**

(21) Anmeldenummer: **21847938.4**

(22) Anmeldetag: **15.12.2021**

(51) Internationale Patentklassifikation (IPC):
***H02S 50/15*** *(2014.01)*

(52) Gemeinsame Patentklassifikation (CPC):
**H02S 50/15;** Y02E 10/50

(86) Internationale Anmeldenummer:
**PCT/EP2021/085893**

(87) Internationale Veröffentlichungsnummer:
**WO 2022/129172 (23.06.2022 Gazette 2022/25)**

(54) **VERFAHREN UND VORRICHTUNG ZUR QUALITÄTSBEWERTUNG EINER SOLARZELLE**

METHOD AND DEVICE FOR ASSESSING THE QUALITY OF A SOLAR CELL

PROCÉDÉ ET DISPOSITIF PERMETTANT L'ÉVALUATION DE LA QUALITÉ D'UNE CELLULE SOLAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **16.12.2020   DE 102020133701**

(43) Veröffentlichungstag der Anmeldung:
**25.10.2023   Patentblatt 2023/43**

(73) Patentinhaber: **Fraunhofer-Gesellschaft zur Förderung
der angewandten Forschung e.V.
80686 München (DE)**

(72) Erfinder:
  • **GREULICH, Johannes
    79110 Freiburg (DE)**
  • **HÖFFLER, Hannes
    79110 Freiburg (DE)**
  • **WÖHRLE, Nico
    79110 Freiburg (DE)**
  • **DEMANT, Matthias
    79110 Freiburg (DE)**

(74) Vertreter: **LBP Lemcke, Brommer & Partner
Patentanwälte mbB
Siegfried-Kühn-Straße 4
76135 Karlsruhe (DE)**

(56) Entgegenhaltungen:
**WO-A1-2018/098516     US-A1- 2017 237 396**

**Beschreibung**

Die Erfindung betrifft ein Verfahren und eine Vorrichtung zur kontaktlosen Qualitätsbewertung einer Solarzelle. Das Dokument US 2017/237396 A1 beschreibt ein Verfahren zur Qualitätsbewertung einer Solarzelle.

Bei der Herstellung von Solarzellen ist es erforderlich, im Rahmen einer Qualitätsbewertung zu überprüfen, ob die realisierte Beschaffenheit einer hergestellten Solarzelle ihrer geforderten Beschaffenheit entspricht. Insbesondere betrifft dies die elektrischen Eigenschaften der geprüften Solarzelle, welche sich innerhalb vorgegebener Qualitätsgrenzen bewegen müssen, um einen erforderlichen Wirkungsgrad der Solarzelle im Betrieb zur Umwandlung von Sonnenlicht in elektrische Energie gewährleisten zu können.

Für die Qualitätsbewertung sind Verfahren und Vorrichtungen bekannt, bei denen die Solarzelle elektrisch kontaktiert und mit Anregungsstrahlung beaufschlagt wird, um die elektrischen Eigenschaften der Solarzelle, insbesondere Leistungsdaten ermitteln zu können. Typischerweise wird eine Messelektronik verwendet, mit der die Elektroden der Solarzelle verbunden werden und eine elektrische Last z.B. durch Vorgabe einer Spannung an den Elektroden nachgebildet wird. Wird die an den Elektroden anliegende Spannung mittels der Messelektronik variiert, lassen sich verschiedene Arbeitspunkte der Solarzelle abbilden. Durch Messung des Stromes in Abhängigkeit der anliegenden Spannung lässt sich eine Strom-Spannungs-Kennlinie der Solarzelle ableiten, aus deren Verlauf eine Qualitätsinformation, insbesondere Kenngrößen wie Kurzschlussstromdichte, Offenklemmspannung, Füllfaktor und Wirkungsgrad für die Qualitätsbewertung der Solarzelle ermittelt werden kann.

Um hohe Qualitätsraten sicherstellen zu können, ist es vorteilhaft, sog. 100%-Inline-Messungen (und/oder: 100%-Inline-Prüfungen) durchzuführen, bei denen alle hergestellten Solarzellen bereits während ihrer Herstellung hinsichtlich ihrer Qualität bewertet werden. Dies muss innerhalb der Taktzeiten der jeweiligen Herstellungsprozesse erfolgen, welche bei modernen Herstellungsverfahren zunehmend kürzer werden. Der elektrische Kontaktierungsvorgang bekannter Verfahren ist zeitintensiv und daher nur eingeschränkt in Verfahren mit kurzen Taktzeiten einsetzbar. Deswegen besteht ein Bedarf nach Prüf- und Messverfahren, mit kürzeren Prüf- bzw. Messzeiten, sodass eine Qualitätssicherung innerhalb der Taktzeiten moderner Herstellverfahren erfolgen kann.

Aus EP 2 245 473 B1 ist ein kontaktloses Verfahren bekannt, mit dem eine ortsaufgelöste Charakterisierung der Solarzelle möglich ist. Dabei wird die Solarzelle inhomogen mit Anregungsstrahlung beaufschlagt, wobei ein Anregungsteilbereich der Solarzelle beleuchtet wird, während ein Senkenteilbereich der Solarzelle abgeschattet wird. Die Beleuchtung der Solarzelle führt zu Strömen an der Solarzellenoberfläche, die vom Anregungsteilbereich in den Senkenteilbereich fließen. Die Intensität der von der Solarzelle emittierten Lumineszenzstrahlung wird mit einer optischen Messvorrichtung ortsaufgelöst erfasst. Anhand der Intensitätsverteilung können die Ortspositionen von lokal erhöhten Serienwiderständen ermittelt werden.

Der Erfindung liegt die Aufgabe zugrunde, ein Verfahren und eine Vorrichtung vorzusehen, die eine Ermittlung globaler Qualitätsinformationen einer Solarzelle in kürzerer Zeit ermöglichen, als die bekannten Verfahren und Vorrichtungen.

Gelöst wird die Aufgabe durch ein Verfahren zur kontaktlosen Qualitätsbewertung einer Solarzelle gemäß Anspruch 1 sowie einer Vorrichtung gemäß Anspruch 16.

Bei dem erfindungsgemäßen Verfahren zur kontaktlosen Qualitätsbewertung einer Solarzelle wird eine erste Lumineszenzmessung durchgeführt, wobei ein erster Teilbereich der Solarzelle mit Anregungsstrahlung gemäß einem ersten Parametersatz beaufschlagt wird und ein zweiter Teilbereich der Solarzelle mit Anregungsstrahlung gemäß einem zu dem ersten Parametersatz unterschiedlichen zweiten Parametersatz beaufschlagt wird und eine erste Intensität $\Phi_1$ einer von der Solarzelle emittierten Lumineszenzstrahlung in dem ersten Teilbereich oder dem zweiten Teilbereich gemessen wird.

Zudem wird eine zweite Lumineszenzmessung durchgeführt, wobei eine zweite Intensität $\Phi_2$ einer von der Solarzelle emittierten Lumineszenzstrahlung gemessen wird, wobei gemäß einer Alternative A der erste Teilbereich der Solarzelle gemäß dem ersten Parametersatz mit Anregungsstrahlung beaufschlagt wird und der zweite Teilbereich der Solarzelle mit Anregungsstrahlung gemäß einem zu dem ersten Parametersatz unterschiedlichen dritten Parametersatz beaufschlagt wird und die zweite Intensität $\Phi_2$ in demjenigen Teilbereich gemessen wird, in welchem die erste Intensität $\Phi_1$ bei der ersten Lumineszenzmessung nicht gemessen wird.

Gemäß einer Alternative B wird die Solarzelle in der zweiten Lumineszenzmessung in dem ersten und dem zweiten Teilbereich homogen mit Anregungsstrahlung gemäß einem vierten Parametersatz beaufschlagt und die zweite Intensität $\Phi_2$ in dem ersten Teilbereich und/oder dem zweiten Teilbereich gemessen.

In einem Auswerteschritt wird eine Qualitätsinformation in Abhängigkeit der ersten Intensität $\Phi_1$ und der zweiten Intensität $\Phi_2$ ermittelt.

Der wesentliche Vorteil in der Durchführung des erfindungsgemäßen Verfahrens besteht darin, dass eine globale Qualitätsbewertung der Solarzelle vollständig ohne elektrische Kontaktierung mit kurzer Mess- und Auswertungsdauer erfolgen kann.

Bei der **ersten Lumineszenzmessung** werden der erste Teilbereich und der zweite Teilbereich der Solarzelle mit unterschiedlicher Anregungsstrahlung gemäß einem ersten und einem hierzu verschiedenen zweiten Parametersatz beaufschlagt. Der Unterschied zwischen den Parametersätzen liegt bevorzugt in mindestens einem oder in mehreren der folgenden Parameter: Intensität der Anregungsstrahlung, Wellenlänge oder Spektrum der Anregungsstrahlung. Eine wesentliche Erkenntnis der Anmelderin ist, dass es grundsätzlich unerheblich ist, in welchem Parameter sich die Parametersätze unterscheiden, sofern besagter Unterschied einen Ladungsträgerfluss zwischen dem ersten und dem zweiten Teilbereich bewirkt. Ein Ladungsträgerfluss zwischen den Teilbereichen wird erzielt, indem in einem Teilbereich eine unterschiedliche Ladungsträger-Generation gegenüber dem zweiten Teilbereich mittels der Anregungsstrahlung erfolgt.

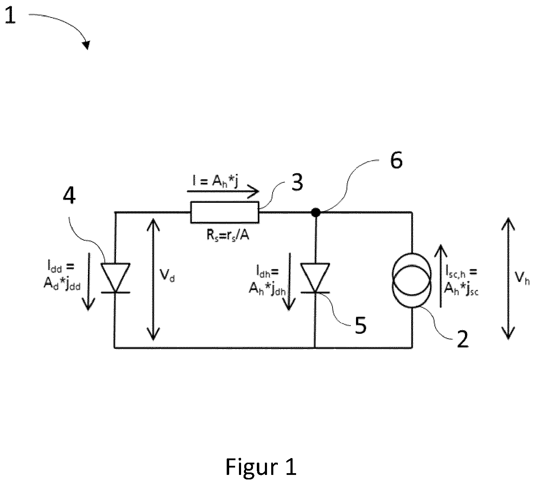

Der Unterschied in den Anregungsstrahlungen der Teilbereiche führt dazu, dass ein Ladungsträgerfluss zwischen den Teilbereichen erfolgt. Dieser Zustand lässt sich in einem vereinfachten Ersatzschaltbild der inhomogen beleuchteten Solarzelle beschreiben, siehe Figur 1: Eine Stromquelle 2 repräsentiert einen Bereich einer Solarzelle 1, in dem eine Ladungsträgertrennung durch Absorption einfallender Anregungsstrahlung erfolgt. Der ohmsche Widerstand 3 repräsentiert den Serienwiderstand der Solarzelle 1. Eine erste Diode 4 repräsentiert die Solarzelle 1 im ersten Teilbereich, während eine zweite Diode 5 die Solarzelle 1 im zweiten Teilbereich repräsentiert.

In dem Beispiel gemäß Figur 1 wird angenommen, dass ausschließlich oder zumindest in einem wesentlich höheren Maß im zweiten Teilbereich der Solarzelle eine Ladungsträgertrennung erfolgt als im ersten Teilbereich. Der Stromfluss der Stromquelle 2 verzweigt sich daher an einem Knoten 6 einerseits auf die dem ersten Teilbereich zugeordnete erste Diode 4, welche in einer gemeinsamen Reihenschaltung mit dem ohmschen Widerstand 3 angeordnet ist, sowie andererseits auf die dem zweiten Teilbereich zugeordnete zweite Diode 5. Darüber hinaus wird unter Annahme des vorbeschriebenen Ersatzschaltbildes ein geschlossener Stromkreis durch die erste Diode 4 und zweite Diode 5 sowie den ohmschen Widerstand 3 der Solarzelle 1 gebildet.

Eine wesentliche Erkenntnis der Anmelderin ist darin begründet, dass sich grundsätzlich jede Solarzelle durch Aufstellung einer Spannungsbilanz am geschlossenen Stromkreis, welcher durch den ohmschen Widerstand 3, die erste Diode 4 und die zweite Diode 5 gebildet wird und/oder durch Aufstellung einer Strombilanz am Knoten 6 charakterisieren lässt.

Eine weitere Erkenntnis der Anmelderin ist, dass der erzeugte Ladungsträgerfluss, welcher sich infolge der inhomogenen Beleuchtung der Solarzelle auf die beiden Teilbereiche der Solarzelle aufteilt, eine Lumineszenzstrahlung in beiden Teilbereichen bewirkt, welche von den elektrischen Eigenschaften der Solarzelle beeinflusst werden und sich in den elektrischen Kenngrößen des Ersatzschaltbildes der inhomogen beleuchteten Solarzelle widerspiegeln. Durch Messung der ersten und zweiten Intensität ist es möglich, einen Rückschluss auf einzelne Terme der Spannungsbilanz und/oder der Strombilanz zu machen und die Solarzelle dadurch zu charakterisieren. Die dabei herrschenden Zusammenhänge sind nachfolgend beschrieben.

Wird unter Berücksichtigung des Ersatzschalbildes gemäß Figur 1 eine **Spannungsbilanz** in dem geschlossenen Stromkreis aufgestellt, welcher durch den Serienwiderstand 3, die erste Diode 4 und die zweite Diode 5 gebildet wird, ergibt sich anhand der Kirchhoffeschen Maschenregel, dass der Spannungsabfall an dem Serienwiderstand 3 der Summe der Spannungen ergibt, die an der ersten Diode 4 und an der zweiten Diode 5 anliegen.

Durch Messung einer Intensität der von der Solarzelle emittierten Lumineszenzstrahlung im ersten oder im zweiten Teilbereich können die Spannungen, welche an der ersten Diode 4 und an der zweiten Diode 5 anliegen, jeweils ermittelt werden. Der Zusammenhang zwischen der ersten Intensität und einer der Spannungen lässt sich durch Gleichung (1) beschreiben.

$$\phi_1 = C*\exp(V_1/V_t) \qquad\qquad \text{Gleichung (1)}$$

Gemäß Gleichung (1) ist $V_1$ eine der Spannungen, die entweder an der ersten oder an der zweiten Diode anliegt. Welche der beiden Spannungen dies ist, hängt davon an, in welchem Teilbereich die erste Intensität gemessen wird: Wird die erste Intensität im ersten Teilbereich gemessen, so entspricht $V_1$ der Spannung, die an der ersten Diode 4 gemäß Figur 1 anliegt. Wird die erste Intensität im zweiten Teilbereich gemessen, so entspricht $V_1$ der Spannung, die an der zweiten Diode 5 gemäß Figur 1 anliegt. $V_t$ eine thermische Spannung der Solarzelle, und C eine Kalibrierkonstante, welche insbesondere von den Messbedingungen bei der Lumineszenzmessung abhängig ist.

Wesentlich ist, dass die thermische Spannung $V_t$ sowie die Kalibrierkonstante nicht bekannt sein müssen, sondern lediglich, dass die gemessene erste Intensität $\phi_1$ in Abhängigkeit der ersten Spannung $V_1$ ausgedrückt werden kann und umgekehrt.

Wird Gleichung (1) nach der Spannung $V_1$ aufgelöst, so kann die Spannung $V_1$ in die aufgestellte Spannungsbilanz eingesetzt werden. Dies hat zur Folge, dass die Spannungsbilanz einen Spannungsterm aufweist, der in Abhängigkeit der ersten Intensität ausgedrückt wird. Da der geschlossene Stromkreis, in dem die Spannungen bilanziert werden, drei Spannungen aufweist, weist auch die Spannungsbilanz drei Terme auf. Damit anhand der Spannungsbilanz eine Spannung unmittelbar ermittelt werden kann, muss zumindest ein weiterer Spannungsterm näher bestimmt werden.

Die erfindungsgemäße Erkenntnis der Anmelderin ist, dass besagter Spannungsterm unter Durchführung einer weiteren Lumineszenzmessung ermittelbar ist. Diese Vorgehensweise spiegelt sich der zweiten Lumineszenzmessung gemäß Alternative A wider.

Bei der **zweiten Lumineszenzmessung gemäß Alternative** A wird die zweite Intensität in demjenigen Teilbereich gemessen, in welchem die erste Intensität bei der ersten Lumineszenzmessung nicht gemessen wurde. Daraus ergibt sich die zweite Intensität. Diese ist entsprechend Gleichung (2) ebenso von der thermischen Spannung $V_t$ der Solarzelle, sowie der Kalibrierkonstante C abhängig.

$$\phi_2 = C*\exp(V_2/V_t) \qquad\qquad \text{Gleichung (2)}$$

Bei der Spannung $V_2$ handelt es sich um jene Spannung, welche an derjenigen Diode anliegt, die den Teilbereich der Solarzelle repräsentiert, in dem die zweite Intensität gemessen wurde. Dies bedeutet, dass die implizite Spannung $V_2$ der Spannung im zweiten Teilbereich der Solarzelle entspricht, wenn die Spannung $V_1$ im ersten Teilbereich gemessen wurde und umgekehrt.

Bei Durchführung der zweiten Lumineszenzmessung ist es unwesentlich, ob die Kalibrierkonstante C oder die thermische Spannung $V_t$ bekannt sind. Vielmehr ist es wesentlich, dass durch Umstellung von Gleichung (2) die Spannung $V_2$ in Abhängigkeit der zweiten Intensität ausgedrückt werden kann.

Wird Gleichung (2) nach der Spannung $V_2$ umgestellt, so kann die sich ergebende Spannung in die aufgestellte Spannungsbilanz eingesetzt werden.

Anhand der ersten Spannung $V_1$ und der zweiten Spannung $V_2$ ist es somit insgesamt möglich, zwei der drei Spannungsterme der Spannungsbilanz in Abhängigkeit der ersten und zweiten Intensität auszudrücken. Da die erste Spannung $V_1$ und zweite Spannung $V_2$ jeweils den Spannungen entsprechen, die an den Dioden anliegen, lässt sich die Spannungsbilanz derart nach der Spannung umstellen, die an dem ohmschen Widerstand 3 (vgl. Figur 1) anliegt. Da der ohmsche Widerstand 3 den Serienwiderstand der Solarzelle repräsentiert, lässt sich anhand der ersten und der zweiten Intensität somit unmittelbar ein Rückschluss auf die Qualität der Solarzelle ziehen.

Es ist eine erfindungswesentliche Erkenntnis der Anmelderin, dass es für die Durchführbarkeit des Verfahrens nicht relevant ist, welche Werte die Kalibrierkonstante C oder die thermische Spannung $V_t$ bei Durchführung der ersten Lumineszenzmessung und der zweiten Lumineszenzmessung gemäß Alternative A aufweisen. Es ist lediglich vorteilhaft, wenn die Kalibrierkonstante C und die thermische Spannung $V_t$ zwischen der ersten und zweiten Lumineszenzmessung gemäß Alternative A nicht wesentlich variieren, vorzugsweise konstant sind.

In der einfachsten Anwendungsform des Verfahrens ist es somit möglich, mehrere Solarzellen unter Durchführung der ersten Lumineszenzmessung und der zweiten Lumineszenzmessung gemäß Alternative A zu prüfen, indem die erste und zweite Intensität an mehreren hergestellten Solarzellen gemessen werden. Da die Kalibrierkonstante C und die thermische Spannung $V_t$ nicht wesentlich schwanken, haben sie einen konstanten Einfluss auf die gemessenen Intensitäten. Somit kann anhand einer Differenz oder Schwankung zwischen den ersten und/oder zweiten gemessenen Intensitäten mindestens zweier geprüfter Solarzellen unmittelbar auf einen etwaigen Qualitätsunterschied geschlossen werden.

Es liegt auch im Rahmen der Erfindung, dass die erste und zweite Intensität in die Berechnung eines frei definierbaren Kennwertes einfließen können, mit dem die Qualitätsinformation repräsentierbar ist. Dieser Kennwert kann im einfachsten Fall ein Quotient zwischen der ersten und zweiten Intensität sein und z.B. dazu genutzt werden, um eine gefertigte Solarzelle einer Qualitätsklasse zuzuordnen.

In Hinblick auf die Parametersätze, gemäß denen die Solarzelle in der ersten und zweiten Lumineszenzmessung gemäß Alternative A mit Anregungsstrahlung beaufschlagt wird, ist es wesentlich, dass sich der erste Parametersatz in zumindest einem Parameter von dem zweiten und dem dritten Parametersatz unterscheidet. Dadurch wird eine inhomogene Beaufschlagung der Solarzelle mit Anregungsstrahlung sowohl bei der ersten Lumineszenzmessung als auch bei der zweiten Lumineszenzmessung gemäß Alternative A gewährleistet. Erst dadurch können die modellhaften Annahmen in Verbindung mit dem Ersatzschaltbild einer inhomogen mit Anregungsstrahlung beaufschlagten Solarzelle Anwendung finden.

Ferner ist es in Hinblick auf die Parametersätze der ersten Lumineszenzmessung und der zweiten Lumineszenzmessung gemäß Alternative A grundsätzlich unerheblich, ob der zweite Parametersatz sich in einem oder mehreren Parametern von dem dritten Parametersatz unterscheidet. Insbesondere müssen sie nicht identisch sein.

Unterscheidet sich der zweite Parametersatz in einem oder mehreren Parametern von dem dritten Parametersatz, so verändern sich die Spannungen in dem ersten und dem zweiten Teilbereich (repräsentiert durch Dioden 4, 5 gemäß Figur 1) zwischen der ersten Lumineszenzmessung und der zweiten Lumineszenzmessung gemäß Alternative A. Einerseits bedeutet dies, dass für die erste und zweite Lumineszenzmessung nicht dieselbe Spannungsbilanz gelten kann. Andererseits ist es eine wesentliche Erkenntnis der Anmelderin, dass ein Einfluss eines Parameterunterschieds zwischen dem zweiten und dritten Parametersatz in Form eines Korrekturterms in die Spannungsbilanz einfließen kann.

EP 4 264 826 B1

Dieser Korrekturterm kann z.B. in Form eines Koeffizienten ausgestaltet sein, mit dem die erste oder zweite gemessene Intensität multipliziert wird. Unterscheidet sich der zweite Parametersatz also z.B. in einer Anregungsintensität vom dritten Parametersatz, kann der vorliegende Intensitätsunterschied berücksichtigt werden, indem der Korrekturterm entsprechend dem geschätzten Intensitätsunterschied dazu verwendet wird, um die erste oder zweite Intensität und damit auch einen Spannungsterm der Spannungsbilanz rechnerisch anzupassen.

Ist hingegen nicht bekannt, in welchem Parameter und um welchen Betrag sich der zweite Parametersatz vom dritten Parametersatz unterschiedet, so ist es zur Durchführung des Verfahrens ausreichend, sicherzustellen, dass der zweite und dritte Parametersatz zwischen mehreren geprüften Solarzellen nicht wesentlich variieren und vorzugsweise konstante Parameter umfassen. Dadurch können mehrere Solarzellen relativ zueinander hinsichtlich ihrer Qualitäten geprüft werden, indem eine Differenz oder Schwankung der ersten und/oder zweiten Intensität zwischen mindestens zwei geprüften Solarzellen ermittelt wird und damit unmittelbar auf eine Qualitätsabweichung bei einer der Solarzellen geschlossen werden kann.

In der Durchführung der **zweiten Lumineszenzmessung gemäß Alternative B** spiegelt sich eine weitere erfindungswesentliche Erkenntnis der Anmelderin wider. Dieser liegt zugrunde, dass anstelle einer Spannungsbilanz auch eine Strombilanz am Knoten 6 des Ersatzschaltbildes einer inhomogen beleuchteten Solarzelle aufgestellt werden kann, anhand derer sich die Solarzelle charakterisieren lässt.

Es ist bekannt, dass das Aufteilungsverhältnis eines Stromes an einem Knoten einer elektrischen Schaltung davon abhängig ist, welche ohmschen Widerstände in den Leitungen, auf die der Strom hinter besagtem Knoten aufgeteilt wird, vorliegen. In Bezug auf das Ersatzschaltbild der inhomogen mit Anregungsstrahlung beaufschlagten Solarzelle gemäß Figur 1 beeinflusst insbesondere der ohmsche Widerstand 3 das Aufteilungsverhältnis des Generationsstromes $I_{sc,h}$ am Knoten 6. In einer typischen Notationsweise kennzeichnet der Index "gen" Solarzellenkenngrößen in Bezug auf den Generationsstrom, während der Index "$_{sc}$" typischerweise der Kennzeichnung von Solarzellenkenngrößen bei einem Kurzschlusszustand dient. Vorliegend wird jedoch der Unterschied zwischen dem Generationsstrom und dem Kurzschlussstrom in der angenommenen Vereinfachung vernachlässigt. Rekombinationseffekte in beiden beschriebenen Ersatzschalbildern sind durch die Anordnung der beschriebenen Dioden berücksichtigt. Daher werden der Generationsstrom und der Kurzschlussstrom als identische Größen angenommen. Insbesondere lassen sich für die Charakterisierung des Generationsstromes dieselben Gesetzmäßigkeiten heranziehen, die auch für die Charakterisierung des Kurzschlussstromes verwendbar sind. Im Folgenden wird daher der Generationsstrom und hiervon abgeleitete Größen mit dem Index "$_{sc}$" beschrieben.

Eine Strombilanz entsprechend der Kirchhoffschen Knotenregel am Knoten 6 ergibt, dass die Stromstärke des Generationsstromes $I_{sc,h}$ der Stromquelle 2 der Summe der Stromstärken derjenigen Ströme entspricht, die einerseits durch die Reihenschaltung aus erster Diode 4 und ohmschem Widerstand 3 und andererseits durch die zweite Diode 5 fließen.

Die Stromstärken der Strombilanz lassen sich in Abhängigkeit ihrer jeweiligen Stromdichten ausdrücken. Insbesondere lassen sich die Stromstärken der Ströme, welche durch die erste Diode 4 und/oder die zweite Diode 5 fließen, in Abhängigkeit einer Stromdichte ausdrücken, welche ihrerseits von einer Sättigungsstromdichte $j_0$ der jeweiligen Diode, der an der Diode anliegenden Spannung sowie der thermischen Spannung $V_t$ abhängig ist. Bei Durchführung der ersten Lumineszenzmessung ergibt sich für besagte Stromdichte in der ersten oder zweiten Diode ein Zusammenhang entsprechend Gleichung (3).

$$j_1 = j_0 * \exp(V_1/V_t) \hspace{3cm} \text{Gleichung (3)}$$

Dabei ist $j_1$ die Stromdichte in der ersten oder zweiten Diode und $j_0$ die Sättigungsstromdichte der Diode. Die implizite $V_1$ und die thermische Spannung $V_t$ entsprechen jeweils der Spannung $V_1$ bzw. der thermischen Spannung $V_t$ gemäß Gleichung (1). Dies rührt daher, dass bei der ersten Lumineszenzmessung dieselben Bedingungen unabhängig davon vorliegen, ob eine Spannungsbilanz oder eine Strombilanz aufgestellt wird.

Wird Gleichung (1) nach dem Verhältnis der Spannung $V_1$ zur thermischen Spannung $V_t$, aufgelöst, lässt sich der sich dabei ergebende Term in Gleichung (3) einsetzen. Somit ist die Stromdichte eines Stromes in der ersten oder zweiten Diode von der ersten Intensität $\phi_1$ abhängig.

Damit das Aufteilungsverhältnis des Generationsstromes anhand der Strombilanz ermittelbar ist, muss zumindest eine weitere Stromstärke der Strombilanz näher bestimmt werden. Hierfür kann die zweite Lumineszenzmessung gemäß Alternative B durchgeführt werden. Im Gegensatz zu der zweiten Lumineszenzmessung gemäß Alternative A ist es nicht erforderlich, dass die zweite Intensität an einer inhomogen beleuchteten Solarzelle durchgeführt wird. Stattdessen kann die Solarzelle homogen beleuchtet werden, wobei die zweite Intensität in einem beliebigen Teilbereich der Solarzelle gemessen werden kann.

Bei homogener Beleuchtung einer Solarzelle ändert sich jedoch der Stromfluss in der Solarzelle gegenüber einer inhomogen beleuchteten Solarzelle, da sich diese in einer Offenklemmbedingung befindet. Dies bedeutet, dass an ihren Elektroden zwar eine Spannung, die sog. Offenklemmspannung (auch: Leerlaufspannung) anliegt, jedoch kein externer Strom fließt. Die in der Solarzelle durch Absorption der Anregungsstrahlung erzeugten Ladungsträgerpaare rekombinieren näherungsweise im Wesentlichen am gleichen Ort, so dass unter Vernachlässigung erheblicher lokaler Defekte keine oder nur Ströme geringer Stromstärke in der Solarzelle unter Offenklemmbedingung fließen.

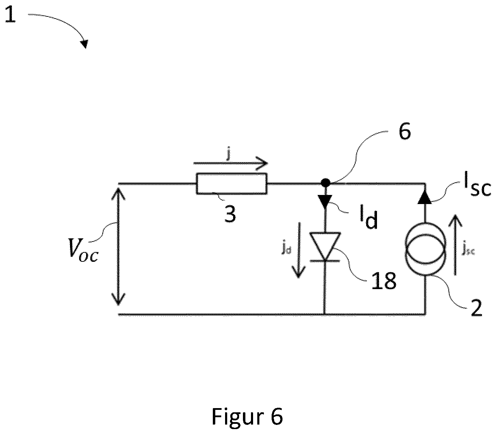

Wird dies auf ein elektrisches Ersatzschaltbild übertragen, so ergeben sich folgende Unterschiede gegenüber dem Ersatzschaltbild der inhomogen beleuchteten Solarzelle. Der beleuchtete Bereich der Solarzelle ist durch eine Stromquelle 2 (siehe Figur 6) repräsentiert. Der Stromfluss der Stromquelle 2 gibt den Generationsstrom wieder, welcher durch Absorption der Anregungsstrahlung und Ladungsträgertrennung in der Solarzelle generiert wird. Eine dritte Diode 18 ist zu der Stromquelle 2 parallelgeschaltet. Aufgrund der Annahme, dass zwischen den Elektroden der Solarzelle kein Strom fließt, fließt aufgrund der Parallelschaltung der dritten Diode 18 und der Stromquelle 2 der gesamte Generationsstrom in guter Näherung durch die dritte Diode 18.

Wird folglich die zweite Intensität in einem beliebigen Teilbereich der homogen beleuchteten Solarzelle gemessen, dessen elektrische Eigenschaften durch die dritte Diode repräsentiert sind, hängt die zweite Intensität analog zu dem Zusammenhang gemäß Gleichung (3) von der Sättigungsstromdichte in der dritten Diode ab. In guter Näherung entspricht die Generationsstromdichte der Stromdichte in der dritten Diode, sodass die Generationsstromdichte in Abhängigkeit von der Sättigungsstromdichte in der dritten Diode und damit auch der zweiten Intensität ausgedrückt werden kann.

In Hinblick auf die Strombilanz kann durch die erste Lumineszenzmessung eine Stromstärke des Stromes, welcher in der ersten oder zweiten Diode fließt, in Abhängigkeit der ersten Intensität ausgedrückt werden. Durch die zweite Lumineszenzmessung gemäß Alternative B lässt sich die Stromstärke des Generationsstromes in Abhängigkeit der zweiten Intensität ausdrücken. Da die Strombilanz insgesamt drei Stromstärkenterme umfasst, die in Summe null ergeben müssen, lässt sich somit eine der Stromstärken in Abhängigkeit der übrigen beiden Stromstärken und damit auch in Abhängigkeit der ersten und der zweiten Intensitäten ausdrücken. Dieser Zusammenhang erlaubt einen Rückschluss darauf, in welchem Verhältnis sich der Generationsstrom auf den ersten und den zweiten Teilbereich einer inhomogen beleuchteten Solarzelle aufteilt. Dies erlaubt wiederum einen Rückschluss auf den Einfluss des Serienwiderstandes der Solarzelle, was eine Qualitätsinformation darstellt.

Es ist eine erfindungswesentliche Erkenntnis der Anmelderin, dass es unerheblich ist, welchen Wert die Sättigungsstromdichte $j_0$ bei der Durchführung der ersten Lumineszenzmessung und der zweiten Lumineszenzmessung aufweist. Da die Sättigungsstromdichte eine Solarzelleneigenschaft darstellt, die sich zwischen der ersten und zweiten Lumineszenzmessung nicht schwankt, kann davon ausgegangen werden, dass die Sättigungsstromdichte $j_0$ einen konstanten Einfluss auf die ermittelbaren Intensitäten hat. In der einfachsten Anwendungsform des Verfahrens ist es somit möglich, die erste und zweite Intensität bei mindestens zwei zu prüfenden Solarzellen zu ermitteln und eine Differenz oder Schwankung der ersten und/oder zweiten Intensität zwischen zwei geprüften Solarzellen unmittelbar auf ein Qualitätsdefizit bei einer der geprüften Solarzellen zurückzuführen.

In Hinblick auf die Parametersätze, gemäß denen die Solarzelle in der ersten und zweiten Lumineszenzmessung gemäß Alternative B mit Anregungsstrahlung beaufschlagt wird, ist es wesentlich, dass der erste Parametersatz sich in zumindest einem Parameter von dem zweiten Parametersatz unterscheidet. Allerdings ist es grundsätzlich unerheblich, ob der erste oder zweite Parametersatz sich jeweils in einem oder mehreren Parametern von dem vierten Parametersatz unterscheidet. Ist dies der Fall, so können die Ströme, welche in dem ersten und dem zweiten Teilbereich (repräsentiert durch Dioden 4, 5 gemäß Figur 1) flie-ßen, zwischen der ersten Lumineszenzmessung und der zweiten Lumineszenzmessung gemäß Alternative B schwanken. Eine derartige Schwankung kann jedoch, analog zu den Ausführungen zur zweiten Lumineszenzmessung gemäß Alternative A, mittels eines Korrekturterms in der Strombilanz berücksichtigt werden. Der Korrekturterm kann dabei in Form eines Koeffizienten ausgestaltet sein, mit dem die erste oder zweite gemessene Intensität multipliziert wird. Unterscheidet sich z.B. der zweite Parametersatz in einer Anregungsintensität vom vierten Parametersatz, kann der vorliegende Intensitätsunterschied zur Ermittlung des Fehlerterms herangezogen werden, mit dem die erste oder zweite Intensität nach ihrer Messung betraglich angepasst wird.

Ist hingegen nicht bekannt, in welchem Parameter und um welchen Betrag sich der erste oder zweite Parametersatz vom vierten Parametersatz unterschieden, ist es für die Anwendbarkeit des Verfahrens ausreichend, sicherzustellen, dass der erste, zweite und vierte Parametersatz zwischen mehreren geprüften Solarzellen jeweils nicht wesentlich variieren. Dadurch kann angenommen werden, dass ein Unterschied zwischen den Parametersätzen einen gleichbleibenden Einfluss auf die gemessenen Intensitäten hat. Eine Differenz oder Schwankung der ersten und/oder zweiten Intensität zwischen zwei geprüften Solarzellen kann dadurch unmittelbar auf ein Qualitätsdefizit bei einer der Solarzellen zurückgeführt werden kann.

In einer vorteilhaften Weiterbildung des Verfahrens umfasst die erste Lumineszenzmessung eine erste Einzelmessung, mittels derer die erste Intensität ortsunabhängig für den gesamten ersten oder zweiten Teilbereich gemessen wird. Ferner umfasst die zweite Lumineszenzmessung eine zweite Einzelmessung, mittels derer die zweite Intensität ebenfalls ortsunabhängig in demjenigen Teilbereich gemessen wird, in dem die erste Intensität gemäß der Alternative A nicht gemessen wird oder in dem ersten und/oder zweiten Teilbereich ortsunabhängig gemäß der Alternative B gemessen wird. Die erste und die zweite Intensität liegen jeweils als ein Einzelwert vor. Die Qualitätsinformation ist eine ortsunabhängige Qualitätsinformation über die gesamte Solarzelle.

Die vorstehend beschriebene Weiterbildung beruht auf der Erkenntnis, dass die Qualität der gesamten Solarzelle als globale Qualitätsinformation mittels lediglich zweier Intensitätsmessungen ermittelbar ist. Sowohl für die erste als auch für die zweite Einzelmessung kann somit ein einzelnes Sensorelement verwendet werden, mit dem die Intensität der Lumineszenzstrahlung jeweils ortsunabhängig in einem oder beiden Teilbereichen gemessen wird. Die Qualitätsinformation über die gesamte Solarzelle lässt sich vorzugsweise nur anhand der zwei gemessenen Intensitäten ermitteln. Bevorzugt werden mehr als nur zwei Lumineszenzmessungen durchgeführt, welche jeweils eine Einzelmessung enthalten.

Entgegen dem Verfahren, welches aus EP 2 245 473 B1 bekannt ist, erfolgt keine ortsaufgelöste Charakterisierung der Solarzelle. Bei dem vorbekannten Verfahren muss bei einer Lumineszenzmessung eine Mehrzahl an Intensitätswerten gemessen und jeweils einer Position auf der Solarzelle zugeordnet werden. Im Gegensatz dazu, ist es gemäß der vorteilhaften Weiterbildung vorgesehen, dass zumindest bei der ersten und der zweiten Lumineszenzmessung jeweils ein Intensitätswert gemessen wird und dieser insbesondere nicht einer Position auf der Solarzelle zugeordnet ist.

In einer vorteilhaften Weiterbildung des Verfahrens unterscheidet sich der erste Parametersatz in einer Beleuchtungsintensität von dem zweiten, dem dritten und dem vierten Parametersatz, wobei der erste Parametersatz vorzugsweise eine erste Beleuchtungsintensität in Höhe von 0 Watt pro Quadratmeter umfasst, sodass der erste Teilbereich bei der ersten Lumineszenzmessung und bei der zweiten Lumineszenzmessung gemäß Alternative A nicht beleuchtet, insbesondere abgeschattet wird. Vorzugsweise umfassen der zweite Parametersatz, der dritte Parametersatz und der vierte Parametersatz jeweils mindestens eine zweite Beleuchtungsintensität, welche vorzugsweise zumindest 30 Watt pro Quadratmeter, bevorzugt zumindest 50 W/m$^2$, weiter bevorzugt zumindest 1000 W/m$^2$ beträgt.

Die Erkenntnis der Anmelderin, die dieser vorteilhaften Weiterbildung des Verfahrens zugrunde liegt, ist, dass ein Unterschied in der Beleuchtungsintensität einen überdurchschnittlich hohen Einfluss auf die Ausbildung eines Ladungsträgerflusses zwischen dem ersten und dem zweiten Teilbereich hat. Dieser ist, wie bereits beschrieben, erforderlich, um anhand der ersten und zweiten gemessenen Intensität die elektrischen Eigenschaften des elektrischen Netzwerks entsprechend den Ersatzschaltbildern einer inhomogen und einer homogen mit Anregungsstrahlung beaufschlagten Solarzelle bewerten zu können.

In besonders einfacher Weise lässt sich der Vorteil durch den beschriebenen Intensitätsunterschied erreichen, wenn der erste Teilbereich nicht beleuchtet wird, vorzugsweise abgeschattet wird. Der wesentliche Vorteil in der Abschattung des ersten Teilbereichs ist darin zu sehen, dass einfache Mittel, z.B. in Form einer Schattenmaske oder sonstigen lichtundurchlässigen Vorrichtung verwendet werden können, um eine inhomogene Beaufschlagung der Solarzelle zumindest bei der ersten Lumineszenzmessung zu realisieren. Dadurch reduziert sich der Steuerungs- und Regelungsaufwand gegenüber einer Messkonfiguration, bei der die Beleuchtungsintensität des ersten Parametersatzes einem nominalen Wert ungleich 0 Watt pro Quadratmeter entsprechen muss.

Ferner geht die Abschattung des ersten Teilbereiches bei der Ermittlung der ersten oder zweiten Intensität in dem ersten Teilbereich mit weniger störenden Fremdlichteinflüssen einher. Dadurch kann eine Messvorrichtung zur Ermittlung der ersten oder zweiten Intensität in dem ersten Teilbereich in einfacher Weise, z.B. als Matrixkamera, ausgestaltet sein, bei der keine Kompensation besagter störender Lichteinflüsse realisiert sein muss.

In Hinblick auf die zweite Beleuchtungsintensität, falls sie für den zweiten, dritten und vierten Parametersatz identisch ausgestaltet ist, lässt sich die Qualitätsbewertung der Solarzelle weiter vereinfachen. Dies ist dadurch begründet, dass die Beleuchtungsintensität einen wesentlichen Einfluss auf den Generationsstrom hat: Werden die Beleuchtungsintensitäten in der ersten und zweiten Lumineszenzmessung durch die gemeinsame zweite Beleuchtungsintensität vereinheitlicht, so vereinheitlicht sich auch der Generationsstrom, insbesondere die Generationsstromdichte. Dadurch lässt sich für die erste und die zweite Lumineszenzmessung (gemäß Alternative A und B) ein und dieselbe Spannungs- und Strombilanz annehmen. Zwar lässt sich der Einfluss einer schwankenden Beleuchtungsintensität, wie in Hinblick auf das erfindungsgemäße Verfahren beschrieben, mittels eines Korrekturterms rechnerisch kompensieren, allerdings reduziert sich die Fehleranfälligkeit des Verfahrens, wenn kein zusätzlicher Korrekturterm vorgesehen werden muss.

In einer vorteilhaften Weiterbildung des Verfahrens wird in dem Auswerteschritt eine Stromdichte und eine Spannung an einem Arbeitspunkt der Solarzelle ermittelt, wobei die Stromdichte und die Spannung von der ersten Intensität und der zweiten Intensität abhängig sind.

Der Vorteil in der Ermittlung einer Stromdichte ist, dass diese eine gängige physikalische Größe darstellt, mit der die Solarzelle analytisch beschreibbar ist. Unter Ermittlung der Stromdichte lassen sich die erfindungsgemäß geprüften Solarzellen mit anderen Solarzellen vergleichen, bei denen die Stromdichte z.B. auf konventionelle Weise bestimmt wurde.

In Hinblick auf das Ersatzschaltbild einer inhomogen mit Anregungsstrahlung beaufschlagten Solarzelle ist insbesondere diejenige Stromdichte für die Qualitätsbewertung von Relevanz, welche in demjenigen Teilbereich vorliegt, der entsprechend Figur 1 durch Diode 4 repräsentiert wird. Diese ist einer inhomogen beleuchteten Solarzelle in einer Reihenschaltung mit dem ohmschen Widerstand angeordnet. Im Falle eines abgeschatteten ersten Teilbereiches handelt es sich um die Stromdichte in dem ersten Teilbereich der Solarzelle.

Zur Ermittlung der Stromdichte wird erneut der Umstand berücksichtigt, dass die erste und die zweite Intensität jeweils in Abhängigkeit einer Spannung der Solarzelle ausgedrückt werden können, die in dem ersten Teilbereich bzw. dem zweiten Teilbereich der Solarzelle vorliegt. Dies ist durch die Gleichungen (1) und (2) beschrieben. Für die **erste Lumineszenzmessung** lässt sich der Zusammenhang entsprechend den Gleichungen (1) und (2) auch durch Gleichung (4) ausdrücken.

$$\phi_1 = C * \exp(\{V_{TB1} \lor V_{TB2}\}/V_t) \hspace{2cm} \text{Gleichung (4)}$$

Dabei ist $\phi_1$ die erste Intensität, welche von der Spannung $V_{TB1}$ oder $V_{TB2}$ abhängig ist. Die Abhängigkeit ergibt sich, wie in Bezug auf das erfindungsgemäße Verfahren beschrieben, je nachdem in welchem Teilbereich die erste Intensität $\phi_1$ gemessen wurde. Die Abhängigkeit von der Spannung $V_{TB1}$ ergibt sich, sofern die erste Intensität $\phi_1$ in dem ersten Teilbereich gemessen wurde. Sofern die erste Intensität $\phi_1$ in dem zweiten Teilbereich gemessen wurde, ist diese abhängig von der Spannung $V_{TB2}$.

Wird die **zweite Lumineszenzmessung entsprechend Alternative** A durchgeführt, so ergibt sich die zweite Intensität $\phi_2$ ebenfalls je nachdem, in welchem Teilbereich die erste Intensität $\phi_1$ gemessen wurde. Wurde die erste Intensität in dem ersten Teilbereich gemessen, so gilt für die zweite Intensität der Zusammenhang nach Gleichung (5).

$$\phi_2 = C * \exp(V_{TB2}/V_t) \hspace{2cm} \text{Gleichung (5)}$$

Wurde die erste Intensität $\phi_1$ hingegen in dem zweiten Teilbereich gemessen, so gilt für die zweite Intensität der Zusammenhang nach Gleichung (6)

$$\phi_2 = C * \exp(V_{TB1}/V_t) \hspace{2cm} \text{Gleichung (6)}$$

Entsprechend des Ersatzschaltbilds der inhomogen mit Anregungsstrahlung beaufschlagten Solarzelle gemäß Figur 1 ergibt sich für die Strombilanz am Knoten 6 zwischen der Stromquelle 2 und der ersten Diode 4 (entspricht erstem Teilbereich) und der zweiten Diode 5 (entspricht zweitem Teilbereich) eine Strombilanz entsprechend Gleichung (7).

$$I_{gen} = I_{TB1} + I_{TB2} \hspace{2cm} \text{Gleichung (7)}$$

Dabei ist $I_{gen}$ die Stromstärke des durch die Stromquelle ausgegebenen Generationsstromes, $I_{TB1}$ die Stromstärke des Stromes, der durch die erste Diode 4 fließt und $I_{TB2}$ die Stromstärke des Stromes, der durch die zweite Diode 5 fließt.

Analysen der Anmelderin haben gezeigt, dass sich die Ermittlung der Stromdichte vereinfacht, wenn dem ersten und dem zweiten Teilbereich gleich große Flächen zugrunde liegen, in denen sie mit Anregungsstrahlung beaufschlagt werden. Bei identischen Flächengrößen, die dem ersten und dem zweiten Teilbereich der Solarzelle zugeordnet werden können, lässt sich Gleichung (7) in Abhängigkeit der Stromdichten der jeweiligen Ströme ausdrücken. Hierbei gilt der Zusammenhang gemäß Gleichung (8).

$$j_{gen} = j_{TB1} * 0{,}5 + j_{TB2} * 0{,}5 \hspace{2cm} \text{Gleichung (8)}$$

Dabei ist $j_{gen}$ die Generationsstromdichte und $j_{TB1}$ sowie $j_{TB2}$ die Stromdichten der Ströme in dem ersten bzw. zweiten Teilbereich der Solarzelle. Der Zusammenhang gemäß Gleichung (8) gilt analog für die Kurzschlussstromdichte $j_{sc}$. Wird berücksichtigt, dass die Stromdichten $j_{TB1}$ sowie $j_{TB2}$ analog zum Zusammenhang gemäß Gleichung (3) jeweils in Abhängigkeit einer gemeinsamen Sättigungsstromdichte $j_0$ sowie der jeweils vorliegenden impliziten Spannung $V_{TB1}$ bzw. $V_{TB2}$ ausgedrückt werden können, lässt sich der Zusammenhang gemäß Gleichung (8) entsprechend Gleichung (9) abbilden.

$$j_{gen} = j_0 * \exp(V_{TB1}/V_t) * 0{,}5 + j_0 * \exp(V_{TB2}/V_t) * 0{,}5 \hspace{2cm} \text{Gleichung (9)}$$

Durch Umstellung der Gleichungen (4)-(6) nach den jeweils zugrundeliegenden Spannungsverhältnissen lässt sich der Zusammenhang nach Gleichung (9) entsprechend Gleichung (10) ausdrücken.

$$j_{gen} = j_0 * \phi_1/C*0,5 \; + j_0* \; \phi_2/C \; *0,5 \qquad\qquad \text{Gleichung (10)}$$

Durch Auflösen von Gleichung (10) nach der Sättigungsstromdichte $j_0$ ergibt sich Gleichung (11).

$$j_0 = j_{gen} \: / \: (\phi_1/C*0,5 + \phi_2/C*0,5) \qquad\qquad \text{Gleichung (11)}$$

Damit lässt sich die Sättigungsstromdichte in Abhängigkeit der Generationsstromdichte $j_{gen}$ sowie der ersten und zweiten Intensität ausdrücken.

Eine Erkenntnis der Anmelderin ist, dass im Falle einer inhomogen beleuchteten Solarzelle die Stromdichte im serienwiderstandsbehafteten Bereich gemäß Gleichung (12) ausgedrückt werden kann, sofern die erste Intensität in dem ersten Teilbereich gemessen wird, welche gemäß Figur 1 durch die erste Diode 4 repräsentiert werden kann.

$$j_{TB1}(V=V_{TB1}) = - \: j_0 * \exp(V_{TB1}/V_t) \qquad\qquad \text{Gleichung (12)}$$

In Zusammenschau mit Gleichung (11) lässt sich Gleichung (12) entsprechend Gleichung (13) umstellen.

$$j_{TB1}(V=V_{TB1}) = - \: j_{gen} \: /(0,5 * (1+ \phi_2/\phi_1 \: )) \qquad\qquad \text{Gleichung (13)}$$

Der Spannungspunkt V entspricht hierbei der Spannung $V_{TB1}$, welche sich durch nachfolgend dargestellte Gleichung (14) in Abhängigkeit der ersten Intensität $\phi_1$ ausdrücken lässt, sofern die erste Intensität bei der ersten Lumineszenzmessung im ersten Teilbereich gemessen wird.

$$V = V_{TB1} = V_t * \ln(\phi_1/C) \qquad\qquad \text{Gleichung (14)}$$

Die thermische Spannung $V_t$, die Kalibrierkonstante C sowie die Generationsstromdichte $j_{gen}$ müssen nicht zwangsläufig bekannt sein, um anhand der ersten und zweiten Intensität eine Stromdichte in einem Spannungspunkt ermitteln zu können. Vielmehr ist es die Erkenntnis der Anmelderin, dass alleine anhand der bekannten ersten und zweiten Intensität eine aussagekräftige Qualitätsinformation in Form einer Stromdichte abgeleitet werden kann. Dies kann z.B. erfolgen, indem für eine Mehrzahl geprüfter Solarzellen angenommen wird, dass die thermische Spannung $V_t$, die Kalibrierkonstante C sowie die Generationsstromdichte $j_{gen}$ im Wesentlichen konstant sind und einen dementsprechend konstanten Einfluss auf die ermittelbare Stromdichte sowie den Spannungspunkt haben. Damit lassen sich die Stromdichten zumindest zweier geprüfter Solarzellen relativ miteinander vergleichen.

Alternativ können für die thermische Spannung $V_t$, die Kalibrierkonstante C sowie die Generationsstromdichte $j_{gen}$ Schätzwerte angenommen oder anhand von Referenzmessungen ermittelt werden.

Die Gleichungen (1)-(14) beruhen insgesamt auf einer stark vereinfachten Annahme hinsichtlich der elektrischen Eigenschafen einer zu prüfenden Solarzelle, welche inhomogen mit Anregungsstrahlung beaufschlagt wird und ein Ersatzschalbild gemäß Figur 1 aufweist. Dies hat zum Vorteil, dass die Lösung der Gleichungen (1)-(14) auf einfache Weise für eine automatisierte Qualitätsüberprüfung der Solarzelle in einer Prüfvorrichtung implementiert werden kann, um das erfindungsgemäße Verfahren zur kontaktlosen Qualitätsbewertung von Solarzellen zu automatisieren.

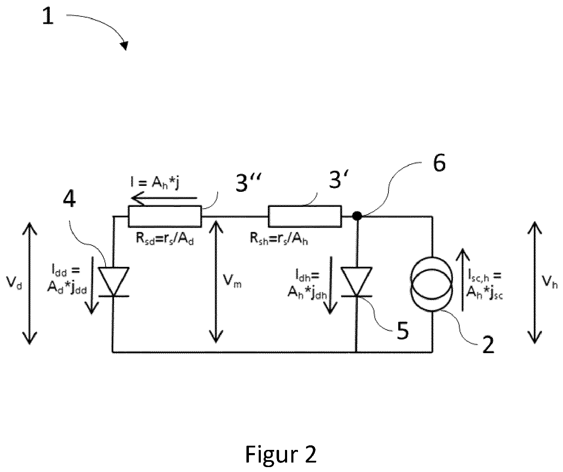

Es ist jedoch eine weitere Erkenntnis der Anmelderin, dass die Zusammenhänge, die der Erfindung zugrunde liegen, sich nicht auf das modellhafte Ersatzschaltbild einer inhomogen mit Anregungsstrahlung beaufschlagten Solarzelle gemäß Figur 1 beschränken. Vielmehr ist es zur Steigerung der Genauigkeit in der Berechnung qualitätsabhängiger Kennwerte vorteilhaft, wenn das Ersatzschaltbild der inhomogen mit Anregungsstrahlung beaufschlagten Solarzelle hinsichtlich seiner Bestandteile einen höheren Detailgrad aufweist und vorzugsweise entsprechend Figur 2 ausgestaltet ist.

Das Ersatzschaltbild gemäß Figur 2 unterscheidet sich insofern von Figur 1, dass anstelle eines ohmschen Widerstandes 3 zwei in Reihe geschaltete ohmsche Widerstände 3' und 3" angeordnet sind. Dies trägt der Erkenntnis der Anmelderin Rechnung, dass nicht lediglich der erste Teilbereich der Solarzelle serienwiderstandsbehaftet ist, sondern auch der zweite Teilbereich der Solarzelle. Insgesamt werden durch das Ersatzschaltbild gemäß Figur 2 die tatsächlichen elektrischen Eigenschaften einer Solarzelle mit höherer Genauigkeit abgebildet als durch das Ersatzschaltbild gemäß Figur 1.

Für die Zusammenhänge, welche durch die Gleichungen (1)-(11) ausgedrückt sind, hat die Aufteilung des ohmschen Widerstandes 3 gemäß Figur 1 in die ohmschen Widerstände 3' und 3" keine Auswirkungen. Die Gleichungen (1)-(11) gelten somit auch für die Charakterisierung einer inhomogen mit Anregungsstrahlung beaufschlagte Solarzelle gemäß Figur 2. In Hinblick auf Gleichung (12) ergibt sich jedoch der Zusammenhang gemäß Gleichung (12').

$$j_{TB1}(V=V_m) = - j_0 * \exp(V_{TB1}/V_t) \qquad \text{Gleichung (12')}$$

Im Gegensatz zu Gleichung (12) bestimmt sich die Stromdichte $j_{TB1}$ in Abhängigkeit der Spannung $V_m$, welche entsprechend der Figur 2 zwischen den Widerständen 3' und 3" anliegt.

In Zusammenschau mit Gleichung (11) lässt sich Gleichung (12') zu Gleichung (13') umstellen.

$$j_{TB1}(V=V_m) = - j_{gen} /(0,5 * (1+ \phi_2/\phi_1 )) \qquad \text{Gleichung (13')}$$

Der Spannungspunkt V entspricht hierbei der Spannung $V_m$, welche sich durch nachfolgend dargestellte Gleichung (14') in Abhängigkeit der ersten und zweiten Intensität $\phi_1$ , $\phi_2$ ausdrücken lässt, sofern die erste Intensität bei der ersten Lumineszenzmessung im ersten Teilbereich und die zweite Intensität bei der zweiten Lumineszenzmessung im zweiten Teilbereich gemessen wird.

$$V = V_m = 0,5*V_t * \{ \ln(\phi_1/C) + \ln(\phi_2/C)\} \qquad \text{Gleichung (14')}$$

Es liegt im Rahmen der Erfindung, dass die Berechnung einer Stromdichte oder eines Spannungspunktes auf Grundlage der modellhaften Annahmen, die dem Ersatzschaltbild gemäß Figur 1 zugrunde liegen, erfolgen kann. Zusätzlich oder alternativ kann das Verfahren zur Berechnung einer Stromdichte oder eines Spannungspunktes auf Grundlage der modellhaften Annahmen, die dem Ersatzschaltbild gemäß Figur 2 zugrunde liegen, erfolgen.

Wird die **zweite Lumineszenzmessung entsprechend Alternative B** durchgeführt ergibt sich bei homogener Beleuchtung die zweite Intensität anstelle der Gleichungen (5) und (6) entsprechend Gleichung (15).

$$\phi_2 = C*\exp(V_{OC}/V_t) \qquad \text{Gleichung (15)}$$

$V_{OC}$ beschreibt die Offenklemmspannung der Solarzelle. Unter den vorliegenden Bedingungen einer unkontaktierten und homogen belichteten Solarzelle entspricht die Generationsstromdichte $j_{gen}$ der Rekombinationsstromdichte der Solarzelle. Dadurch ergibt sich der Zusammenhang zwischen der Generationsstromdichte $j_{gen}$ und der Sättigungsstromdichte $j_0$ entsprechend Gleichung (16).

$$j_{gen} = j_{rec} = j_0 * \exp(V_{oc}/V_t) \qquad \text{Gleichung (16)}$$

Durch Umstellung der Gleichung (15) nach dem Verhältnis der Offenklemmspannung zur thermischen Spannung $V_{oc}/V_t$ lässt sich der sich ergebende Term in Gleichung (16) einsetzen. Für die Sättigungsstromdichte $j_0$ ergibt sich dadurch der Zusammenhang gemäß Gleichung (17).

$$j_0 = j_{gen}*C/\phi_2 \qquad \text{Gleichung (17)}$$

Grundsätzlich ist es bei Durchführung der zweiten Lumineszenzmessung gemäß Alternative B unerheblich, ob die erste Intensität während der ersten Lumineszenzmessung in dem ersten Teilbereich oder in dem zweiten Teilbereich ermittelt wird. Allerdings ist es erforderlich zu berücksichtigen, dass lediglich einer der beiden Teilbereiche durch eine Diode repräsentiert wird, welche, je nach modellhafter Annahme der inhomogen mit Anregungsstrahlung beaufschlagten Solarzelle, mit einem oder zwei ohmschen Widerständen in Reihe geschaltet ist (siehe Ausführungen zu Figur 1 und zu Figur 2).

Auf Grundlage der Erkenntnisse der Anmelderin ergibt sich somit eine erforderliche Fallunterscheidung bei der Ermittlung der Stromdichte, sofern die zweite Lumineszenzmessung entsprechend der Alternative B durchgeführt wird. Für die nachfolgenden Ausführungen wird angenommen, dass der erste Teilbereich durch eine Diode 4 repräsentierbar ist, die entsprechend dem Ersatzschaltbild gemäß Figur 2 sich in einer Reihenschaltung mit den ohmschen Widerständen 3' und 3" angeordnet ist, und der zweite Teilbereich durch Diode 5 repräsentiert wird.

Sofern die erste Intensität bei der ersten Lumineszenzmessung im ersten Teilbereich gemessen wurde, ergibt sich durch Einsetzen der Stromdichte $j_0$ gemäß Gleichung (17) und dem Zusammenhang gemäß Gleichung (4) in Gleichung (12) der Zusammenhang gemäß Gleichung (18).

$$j_{TB1}(V=V_m) = - j_{gen}* \phi_1/ \phi_2 \qquad \text{Gleichung (18)}$$

Hierbei ist $j_{TB1}$ die relevante Stromdichte des Stromes in der Diode 4.

Wurde die erste Intensität hingegen im zweiten Teilbereich der Solarzelle gemessen, ergibt sich für die Stromdichte der Zusammenhang gemäß Gleichung (19).

$$j_{TB1} (V=V_m)) = - j_{gen}*(1- \phi_1/ \phi_2) \qquad \text{Gleichung (19)}$$

Wie bei Gleichung (18) entspricht V dem Spannungspunkt, welcher sowohl in Abhängigkeit der ersten Intensität sowie der zweiten Intensität gemäß Gleichung (20) ermittelt werden muss.

$$V = V_t*\ln( \phi_1/C) + 0{,}5*Vt*\ln(\phi_2/\phi_1-1) \qquad \text{Gleichung (20)}$$

In einer vorteilhaften Weiterbildung des Verfahrens wird die Stromdichte in Abhängigkeit von einem ersten Flächenverhältnis ermittelt, das von einem Verhältnis einer mit Anregungsstrahlung beaufschlagten Fläche des ersten Teilbereiches oder einer mit Anregungsstrahlung beaufschlagten Fläche des zweiten Teilbereiches zu einer qualitätsrelevanten Gesamtfläche der Solarzelle abhängig ist.

Die qualitätsrelevante Gesamtfläche der Solarzelle kann der gesamten Oberfläche der Solarzelle (im Folgenden: Gesamtfläche) entsprechen oder lediglich einem definierten Bereich der Gesamtfläche, von dem z.B. ein Randbereich der Solarzelle ausgenommen ist. Die nicht mit Anregungsstrahlung beaufschlagte Fläche des ersten Teilbereiches (im Folgenden: erste Teilfläche) und die mit Anregungsstrahlung beaufschlagte Fläche des zweiten Teilbereichs (im Folgenden: zweite Teilfläche) können unterschiedliche Abmessungen aufweisen. Für den Zusammenhang zwischen der Gesamtfläche und den beiden Teilflächen gilt Gleichung (21).

$$A = A_1 + A_2 \qquad \text{Gleichung (21)}$$

Dabei ist A die Gesamtfläche, $A_1$ die erste Teilfläche und $A_2$ die zweite Teilfläche ist. Es liegt im Rahmen der Erfindung, dass die Gesamtfläche in weitere Teilflächen unterteilt sein kann.

Für das erste Flächenverhältnis f kann beispielhaft ein Zusammenhang gemäß Gleichung (22) angenommen werden.

$$f = A_2/A \qquad \text{Gleichung (22)}$$

Wird bei der ersten Lumineszenzmessung anhand des dabei zugrundeliegenden Ersatzschaltbildes eine Strombilanz am Knoten zwischen der Stromquelle und den Dioden gebildet, die jeweils den ersten und zweiten Teilbereich repräsentieren, kann der Zusammenhang nach Gleichung (7) angenommen werden. Werden die Ströme $I_{TB1}$ und $I_{TB2}$ der Gleichung (7) in Abhängigkeit ihrer Stromdichten ausgedrückt, fließen die Teilflächen $A_1$ und $A_2$ entsprechend Gleichung (23) in die Strombilanz ein.

$$A*j_{gen} = j_{TB1}*A_1+ j_{TB2}*A_2 \qquad \text{Gleichung (23)}$$

Unter Berücksichtigung von Gleichung (22) ergibt sich der Zusammenhang gemäß Gleichung (24).

$$j_{gen} = j_{TB1}*(1-f)/f + j_{TB2} \qquad \text{Gleichung (24)}$$

Unter Berücksichtigung derselben Zusammenhänge, die durch die Gleichungen (9)-(11) repräsentiert sind, verändern sich die Gleichungen (13), (18) und (19) unter Berücksichtigung des ersten Flächenverhältnisses f in der nachfolgend beschriebenen Weise.

Wird die erste Intensität in dem ersten Teilbereich der Solarzelle gemessen, welcher in dem Ersatzschalbild gemäß Figur 1 durch Diode 4 repräsentiert ist, und die zweite Intensität in dem zweiten Teilbereich gemessen, der durch Diode 5 repräsentiert ist, ergibt sich die Stromdichte entsprechend dem Zusammenhang gemäß Gleichung (25).

$$j(V=V_{TB1}=V_t*\ln[\phi_1/C]) = - j_{gen} /f * (1-f)/ (1-f + f* \phi_2/\phi_1 ) \qquad \text{Gleichung (25)}$$

Wird die erste Intensität in dem ersten Teilbereich der Solarzelle gemessen, welcher gemäß Figur 1 durch Diode 4 repräsentiert ist und die zweite Intensität entsprechend der zweiten Lumineszenzmessung gemäß Alternative B ergibt sich für die Stromdichte der Zusammenhang gemäß Gleichung (26).

$$j(V= V_t*\ln[\phi_1/C]) = - j_{gen} * \phi_1/ \phi_2 * (1-f)/f \qquad \text{Gleichung (26)}$$

Wird die erste Intensität in dem zweiten Teilbereich der Solarzelle gemessen, welcher gemäß Figur 1 durch Diode 5 repräsentiert ist und die zweite Intensität entsprechend der Lumineszenzmessung gemäß Alternative B, ergibt sich für die Stromdichte der Zusammenhang gemäß Gleichung (27).

$$j(V=V_{TB1} = V_t * \ln\{ [\phi_2 - \phi_1]/C *f/[1-f] \}) = - j_{gen} *[1 -\phi_1/\phi_2] \qquad \text{Gleichung (27)}$$

Somit ist es möglich, ein beliebiges erstes Flächenverhältnis f bei der Ermittlung der Stromdichte zu berücksichtigen. Dadurch steigt die Genauigkeit bei der Ermittlung der Stromdichte, insbesondere, wenn nicht gewährleistet werden kann, dass die erste und zweite Teilfläche zwischen mehreren Messungen identisch sind oder hinreichend konstante Abmessungen aufweisen.

Wird für die Ermittlung der Stromdichten gemäß Gleichungen (25)-(27) die modellhafte Vorstellung einer inhomogen mit Anregungsstrahlung beaufschlagten Solarzelle gemäß Figur 2 zugrunde gelegt, ergeben sich die Zusammenhänge entsprechend der nachfolgend aufgeführten Gleichungen (25'),(26') und (27').

Bei Messung der ersten Intensität in dem ersten Teilbereich der Solarzelle, welcher in dem Ersatzschalbild gemäß Figur 2 durch Diode 4 repräsentiert ist, und wobei die zweite Intensität in dem zweiten Teilbereich gemessen wird, der durch Diode 5 repräsentiert ist, ergibt sich die Stromdichte entsprechend dem Zusammenhang gemäß Gleichung (25').

$$j(V=V_m=f*V_t*\ln[\phi_2/C] + (1-f)*V_t*\ln[\phi_1/C]) = - j_{gen} * (1-f)/ \qquad \text{Gleichung (25')}$$
$$(1-f + f* \phi_2/\phi_1 )$$

Wird die erste Intensität in dem ersten Teilbereich der Solarzelle gemessen, welcher gemäß Figur 2 durch Diode 4 repräsentiert ist und die zweite Intensität entsprechend der zweiten Lumineszenzmessung gemäß Alternative B ergibt sich für die Stromdichte der Zusammenhang gemäß Gleichung (26').

$$j(V= V_t*\ln[\phi_1/C] + f* V_t*\ln[\phi_2/\phi_1-(1-f)/f]) = - j_{gen} * \phi_1/ \phi_2 * \qquad \text{Gleichung (26')}$$
$$(1-f)/f$$

Wird die erste Intensität in dem zweiten Teilbereich der Solarzelle gemessen, welcher gemäß Figur 2 durch Diode 5 repräsentiert ist und die zweite Intensität entsprechend der Lumineszenzmessung gemäß Alternative B, ergibt sich für die Stromdichte der Zusammenhang gemäß Gleichung (27').

$$j(V= V_t*\ln[\phi_1/C] + (1-f)* V_t*\ln[f/(1-f)*(1+\phi_2/\phi_1)]) = - j_{gen} \qquad \text{Gleichung (27')}$$
$$*[1 -\phi_1/\phi_2]$$

In einer Weiterbildung des Verfahrens sind der erste Teilbereich in Form mindestens eines ersten Streifens und der zweite Teilbereich in Form mindestens eines zweiten Streifens ausgestaltet, wobei zumindest der erste oder der zweite Streifen durch Projektion infolge der Beaufschlagung der Solarzelle mit Anregungsstrahlung erzeugt wird.

Der Vorteil in der Durchführung des Verfahrens unter Verwendung zumindest eines projizierten Streifens ist darin zu sehen, dass die Positionen und die Abmessungen zumindest des ersten und des zweiten Teilbereichs frei definierbar sind. Dadurch ist es möglich, das erfindungsgemäße Verfahren an Solarzellen verschiedener Abmessungen und Fertigungsstadien durchzuführen.

Um den ersten und/oder zweiten Streifen zu erzeugen, kann eine Projektionsvorrichtung verwendet werden. Sofern diese mit einer Objekterkennungsvorrichtung ausgestattet ist, kann eine zu prüfende Solarzelle an einer beliebigen Position unterhalb der Projektionsvorrichtung angeordnet werden. Die Position der Solarzelle wird dabei durch die Objekterkennungsvorrichtung erkannt. Auf Basis der Daten, die dabei durch die Objekterkennungsvorrichtung ermittelbar sind, können die Positionen und Abmessungen zumindest eines der Streifen an die Position und Abmessungen der Solarzelle angepasst werden.

Vorzugsweise sind der erste Teilbereich und der zweite Teilbereich jeweils auf mehrere Streifen verteilt, sodass sich z.B. bei einem abgeschatteten ersten Teilbereich und einem hell beleuchteten zweiten Teilbereich ein Streifenmuster mit einem alternierenden Intensitätsverlauf ergibt. Vorzugsweise sind die Teilbereiche auf insgesamt drei bis fünfzehn Streifen verteilt.

Sofern die Solarzelle in einem Zustand geprüft wird, in dem sie eine oberflächliche Kontaktierungsstruktur in Form von Metallisierungsfingern oder Busbars aufweist, ist es vorteilhaft, wenn die Streifen im Wesentlichen orthogonal zu den Metallisierungsfingern und parallel zu den Busbars verlaufen.

Vorzugsweise beträgt f = 0.5 und die Intensität der Anregungsstrahlung 100 Watt pro Quadratmeter oder f = 0.05 und die Intensität der Anregungsstrahlung 1000 Watt pro Quadratmeter.

In einer vorteilhaften Weiterbildung des Verfahrens wird die Gesamtfläche der Solarzelle sowie vorzugsweise die Fläche des ersten Teilbereiches und die Fläche des zweiten Teilbereiches mit einer optischen Messvorrichtung, insbesondere einer Matrix- oder Zeilenkamera, gemessen und die Stromdichte j in eine **Stromstärke I,** sowie die Leistungsdichte p = U*j in eine Leistung P = U*I umgerechnet.

Durch die Messung der Gesamtfläche der Solarzelle sowie der Flächen des ersten und zweiten Teilbereiches ist es möglich, bereits ermittelte Stromdichten in flächenunspezifische Stromstärken umzurechnen ohne das Flächenverhältnis f genau kennen oder einstellen zu müssen.

Die optische Messvorrichtung, insbesondere Matrix- oder Zeilenkamera, kann dazu ausgestaltet sein, die Konturen und Flächen des ersten Teilbereiches und/oder des zweiten Teilbereiches vollständig automatisiert zu erkennen. Dies kann erfolgen, indem die Matrix- oder Zeilenkamera Bilddaten erhebt, welche in eine integrierte oder externe Recheneinheit eingegeben werden. Da sich unterschiedliche Parametersätze, bei denen sich z.B. die Beleuchtungsintensität oder Beleuchtungswellenlänge unterscheiden in entsprechend unterschiedlichen Grauwerten oder anderen Bildparametern äußern, lassen sich die Abmessungen der Teilflächen mittels einer digitalen Bildverarbeitung ermitteln. Werden die Teilbereiche in Form von projizierten Streifen gebildet, erlaubt ein Kantenerkennungsalgorithmus die Erkennung der Kantenlängen und -breiten aller vorliegender Streifen und damit auch die Berechnung der jeweiligen Flächen der Streifen aus dem Produkt besagter Kantenlängen und Kantenbreiten.

Die Ermittlung der Stromstärke ist vorteilhaft, da die Stromstärke eine Kenngröße darstellt, welche zwischen den Solarzellen, die zu einem gemeinsamen Modul verschaltet werden sollen, nur geringfügig schwanken darf. Werden also für eine Mehrzahl an Solarzellen mehrere Stromstärken ermittelt, können diese zur Gruppierung hinreichend ähnlicher Solarzellen verwendet werden. Die Ermittlung der Leistung geht mit dem Vorteil einher, da sie eine einfach zu interpretierende und leicht vergleichbare Kenngröße von Solarzellen darstellt.

In einer vorteilhaften Weiterbildung des Verfahrens wird spätestens nach der ersten und der zweiten Lumineszenzmessung eine Parametervariation und/oder eine Flächenvariation durchgeführt und zusätzlich zu der ersten und zweiten Lumineszenzmessung eine dritte Lumineszenzmessung durchgeführt, wobei eine dritte Intensität $\Phi_3$ einer von der Solarzelle emittierten Lumineszenzstrahlung gemessen wird, und wobei die dritte Lumineszenzmessung entsprechend der ersten Lumineszenzmessung oder der zweiten Lumineszenzmessung gemäß Alternative A oder B durchgeführt wird, wobei die dritte Lumineszenzmessung mit einem gegenüber der ersten und/oder der zweiten Lumineszenzmessung unterschiedlichen fünften Parametersatz und/oder einem zweiten Flächenverhältnis f=$f_2$ durchgeführt wird und in dem Auswerteschritt ein Stromdichteverlauf, insbesondere eine Stromdichte-Spannungs-Kennlinie, vorzugsweise eine Strom-Spannungs-Kennlinie, ermittelt wird.

Die Erkenntnis der Anmelderin, die dieser vorteilhaften Ausgestaltung des Verfahrens zugrunde liegt, besteht darin, dass durch Variation zumindest eines der Parametersätze und/oder des ersten Flächenverhältnisses, welche der ersten und/oder der zweiten Lumineszenzmessung zugrunde liegen, ein Stromdichteverlauf in Abhängigkeit mindestens zweier Spannungspunkte ermittelt werden kann.

Dafür können die erste und zweite Lumineszenzmessung in Form einer dritten Lumineszenzmessung im Wesentlichen wiederholt werden, wobei bei der dritten Lumineszenzmessung eine dritte Intensität analog zur ersten Intensität bei der ersten Lumineszenzmessung gemessen wird.

Zumindest einer der Parametersätze der ersten und zweiten Lumineszenzmessung ist durch den fünften Parametersatz ersetzt. Für diese Parametervariation bestehen verschiedene Möglichkeiten, welche nachfolgend erläutert sind.

Eine erste Möglichkeit der Parametervariation umfasst die Veränderung zumindest eines Parameters des ersten oder des zweiten Parametersatzes, sodass sich anstelle des ersten oder zweiten Parametersatzes der fünfte Parametersatz ergibt. Der Unterschied in den Parametersätzen kann sich z.B. in dem Anregungsspektrum oder der Beleuchtungsintensität äußern. Es ist wesentlich, dass der erste oder der zweite Parametersatz nicht in einer Weise variiert wird, dass der fünfte Parametersatz dem ersten oder dem zweiten Parametersatz entspricht. Dadurch liegt bei beliebiger Parametervariation bei der dritten Lumineszenzmessung eine inhomogen beleuchtete Solarzelle vor.

Die Flächenvariation kann zusätzlich oder alternativ zur Parametervariation erfolgen. Die Flächenvariation umfasst eine Veränderung der ersten und/oder der zweiten Teilfläche, in der der erste bzw. der zweite Teilbereich der Solarzelle mit Anregungsstrahlung beaufschlagt wird. Die Flächenvariation kann durch Vergrößerung oder Verringerung der ersten und/oder zweiten Teilfläche erfolgen. Das zweite Flächenverhältnis ergibt sich analog zur Ermittlung des ersten Flächenverhältnisses gemäß Gleichung (22).

Bei Durchführung der dritten Lumineszenzmessung lässt sich nach der Parametervariation und/oder der Flächenvariation die dritte Intensität bestimmen. Durch die Parametervariation und/oder die Flächenvariation ergibt sich entweder ein Unterschied zwischen der dritten Intensität zur ersten bzw. zweiten Intensität oder jedoch zumindest zwischen den Arbeitspunkten, dem die erste und zweite Intensität sowie die dritte Intensität zugeordnet werden können. Wesentlich ist, dass sowohl die erste und zweite Intensität als auch die dritte Intensität einer gemeinsamen Stromdichte-Spannungs-Kennlinie der geprüften Solarzelle zugeordnet werden können.

Diese Erkenntnis lässt sich auf einfache Weise auf die Gleichungen (25)-(27) übertragen: Während mittels der ersten und zweiten Intensität eine erste Stromdichte und Spannung an einem ersten Arbeitspunkt ermittelbar ist, können anhand der dritten Intensität eine weitere Stromdichte und eine weitere Spannung an einem weiteren Arbeitspunkt ermittelt werden. Anhand der beiden Stromdichten und der sich ergebenden Spannungen lässt sich die Stromdichte-Spannungs-Kennlinie der Solarzelle zumindest linear approximieren. Wird die Parametervariation und/oder die Flächenvariation über die dritte Lumineszenzmessung hinaus wiederholt, so lassen sich weitere Stromdichten und Spannungen an weiteren Arbeitspunkten ermitteln.

Mit lediglich einer weiteren Messung kann, wie folgt beschrieben, eine weitere Qualitätsinformation, insbesondere ein weiterer Punkt auf der Strom-Spannungs-(IV-) Kennlinie, bestimmt werden. Es ist eine Erkenntnis der Anmelderin, dass die Intensitäten, welche in der ersten und der zweiten Lumineszenzmessung gemäß Alternative A oder B grundsätzlich messbar sind, in Abhängigkeit voneinander ausgedrückt werden können. Insbesondere kann eine nicht tatsächlich gemessene Intensität in Abhängigkeit zweier gemessener Intensitäten sowie den dabei zugrunde liegenden Generationsstromdichten (auch Kurzschlussstromdichten) ausgedrückt werden.

Wurde die erste Lumineszenzmessung bei Messung einer ersten Intensität im zweiten Teilbereich durchgeführt, wobei $\phi_1 = \phi_{TB2}$ gilt, und die zweite Lumineszenzmessung gemäß Alternative B, wobei $\phi_2 = \phi_{hom}$ gilt, so lässt sich eine Intensität im ersten Teilbereich $\phi_{TB1}$ gemäß nachfolgender Gleichung (28) bestimmen. Hierbei ist $j_{gen,TB2}$ die Generationsstromdichte, welche in dem zweiten Teilbereich bei der ersten Lumineszenzmessung vorliegt und $j_{gen,hom}$ die Generationsstromdichte, welcher in dem ersten und/oder zweiten Teilbereich der Solarzelle bei der zweiten Lumineszenzmessung gemäß Alternative B vorliegt.

$$\phi_{TB1} = (j_{gen,TB2}/j_{gen,hom} * \phi_{hom} - \phi_{TB2}) * f/(1-f) \qquad \text{Gleichung (28)}$$

Wurde die erste Lumineszenzmessung hingegen bei Messung einer ersten Intensität im ersten Teilbereich durchgeführt, wobei $\phi_1 = \phi_{TB1}$ gilt, und die zweite Lumineszenzmessung gemäß Alternative B, wobei $\phi_2 = \phi_{hom}$ gilt, so lässt sich eine Intensität im zweiten Teilbereich $\phi_{TB2}$ gemäß nachfolgender Gleichung (29) bestimmen. Hierbei ist $j_{gen,TB2}$ die Generationsstromdichte, welche in dem zweiten Teilbereich bei der ersten Lumineszenzmessung vorliegt und $j_{gen,hom}$ die Generationsstromdichte, welche in dem ersten und/oder zweiten Teilbereich der Solarzelle bei der zweiten Lumineszenzmessung gemäß Alternative B vorliegt.

$$\phi_{TB2} = j_{gen,TB2}/j_{gen,hom} * \phi_{hom} - \phi_{TB1} * (1-f)/f \qquad \text{Gleichung (29)}$$

Wurde die erste Lumineszenzmessung bei Messung einer ersten Intensität im ersten Teilbereich durchgeführt, wobei $\phi_1 = \phi_{TB1}$ gilt, und die zweite Lumineszenzmessung bei Messung einer zweiten Intensität im zweiten Teilbereich, wobei $\phi_2 = \phi_{TB2}$ gilt, so lässt sich eine Intensität einer Lumineszenzstrahlung beim homogen mit Anregungsstrahlung beaufschlagter Solarzelle $\phi_{hom}$ gemäß nachfolgender Gleichung (30) bestimmen. Hierbei sind $j_{gen,TB2}$ und $j_{gen,hom}$ die Generationsstromdichten, welche dem zweiten Teilbereich bei der ersten Lumineszenzmessung bzw. bei der zweiten Lumineszenzmessung gemäß Alternative B vorliegen.

$$\phi_{hom} = [\phi_{TB2} + \phi_{TB1} * (1-f)/f] * j_{gen,hom}/ j_{gen,TB2} \qquad \text{Gleichung (30)}$$

Bei Durchführung der dritten Lumineszenzmessung lassen sich die Zusammenhänge gemäß den Gleichungen (28)-(30) verwenden, um die ermittelbare Qualitätsinformation bzw. um zusätzlich zu einer einzelnen Stromdichte an einem Arbeitspunkt weitere Stromdichten an anderen Arbeitspunkten zu ermitteln und insbesondere eine Stromdichte-Spannungs-Kennlinie und/oder eine Strom-Spannungs-Kennlinie zu ermitteln. Dies geschieht vorzugsweise auf eine der drei nachfolgend beschriebenen Varianten der vorteilhaften Weiterbildung, welche die dritte Lumineszenzmessung betrifft.

Gemäß einer ersten Variante der vorteilhaften Weiterbildung, welche die dritte Lumineszenzmessung betrifft, wird besagte dritte Lumineszenzmessung entsprechend der ersten Lumineszenzmessung durchgeführt, wobei die dritte Intensität im ersten Teilbereich der Solarzelle gemessen wird. Die Ermittlung eines zusätzlichen Arbeitspunktes auf der IV-Kennlinie erfolgt vorzugsweise in Abhängigkeit davon, welches Ersatzschaltbild der inhomogen mit Anregungsstrahlung beaufschlagten Solarzelle zugrunde gelegt wird. Bei einem Ersatzschaltbild, in welchem der erste Teilbereich nicht oder nur in vernachlässigbar Maß serienwiderstandsbehaftet ist (entsprechend Figur 1), findet Gleichung 26 Anwendung, wobei anstelle des Terms $\phi_1$ der Term $\phi_3$ verwendet wird. Bei Annahme eines Ersatzschaltbildes gemäß Figur 2 findet Gleichung 26' Anwendung, wobei anstelle Terms $\phi_1$ der Term $\phi_3$ verwendet wird. Falls die erste Lumineszenzmessung und die zweite Lumineszenzmessung gemäß Alternative A durchgeführt wurden, kann $\phi_{hom}$ gemäß dem Zusammenhang nach Gleichung (30), aus den ersten beiden gemessenen Intensitäten $\phi_1$ und $\phi_2$ für ein (frei) wählbares $j_{gen,hom}$ berechnet werden und als $\phi_2$ mit $j_{gen,hom}$ als $j_{gen}$ in Gleichung (26) oder (26') zur Ermittlung eines weiteren Arbeitspunktes verwendet werden. Falls die zweite Lumineszenzmessung gemäß Alternative B durchgeführt wurde (homogene Beaufschlagung) kann das dabei gemessene $\phi_2$ unmittelbar für Gleichung (26) oder (26') zur Ermittlung eines weiteren Arbeitspunktes verwendet werden.

Gemäß einer zweiten Variante der vorteilhaften Weiterbildung, welche die dritte Lumineszenzmessung betrifft, wird besagte dritte Lumineszenzmessung entsprechend der ersten Lumineszenzmessung durchgeführt, wobei die dritte Intensität im zweiten Teilbereich der Solarzelle gemessen wird.

Falls die zweite Lumineszenzmessung gemäß Variante A durchgeführt wurde (ausschließl. inhom. Beaufschlagung der Solarzelle mit Anregungstrahlung), kann $\phi_{hom,}$ aus den ersten beiden gemessenen Intensitäten $\phi_1$ und $\phi_2$ für ein (frei) wählbares $j_{gen,hom}$ berechnet und als $\phi_2$ in Gleichung (27) oder (27') mit $j_{gen,hom}$ als $j_{gen}$ verwendet werden. Gleichung (27) findet Anwendung, wenn ein Ersatzschaltbild einer inhomogen mit Anregungsstrahlung beaufschlagten Solarzelle gemäß Figur 1 angenommen wird, während Gleichung (27') zur Anwendung kommt, wenn ein Ersatzschaltbild gemäß Figur 2 angenommen wird. Falls die zweite Lumineszenzmessung gemäß Alternative B durchgeführt wurde (homogene Beaufschlagung) kann das dabei gemessene $\phi_2$ unmittelbar für Gleichung (27) oder (27') zur Ermittlung eines weiteren Arbeitspunktes verwendet werden.

Gemäß einer dritten Variante der vorteilhaften Weiterbildung, welche die dritte Lumineszenzmessung betrifft, wird die dritte Lumineszenzmessung entsprechend einer zweiten Lumineszenzmessung gemäß Alternative B durchgeführt, wobei die dritte Intensität an einer beliebigen Position der homogen mit Anregungsstrahlung beaufschlagten Solarzelle gemessen wird. Die Berechnung eines weiteren Punktes auf der IV-Kennlinie kann gemäß Gleichung (26) oder (26') (Messungen im ersten Teilbereich und unter homogener Beleuchtung) oder gemäß Gleichung (27) oder (27') (Messungen im zweiten Teilbereich und unter homogener Beleuchtung) erfolgen, wobei jeweils für $\phi_2$ das bei der dritten Lumineszenzmessung gemessene $\phi_3$ eingesetzt wird. Falls $\phi_3$ im ersten Teilbereich mit $j_{gen,TB2}$ im zweiten Teilbereich gemessen wurde, wird Gleichung (26) oder (26') zur Ermittlung des weiteren Arbeitspunktes verwendet. Falls $\phi_3$ im zweiten Teilbereich mit $j_{gen,TB2}$ gemessen wurde, wird Gleichung (27) oder (27') verwendet. Jeweils kann $\phi_3$ mit $j_{gen,TB2}$ in der jeweiligen Gleichung verwendet werden.

Auch für den Fall, dass während der Durchführung des Verfahrens Standardtestbedingungen (engl. Standard test conditions, STC, also Beaufschlagung mit dem AM1.5G-Spektrum bei 1000 W/m$^2$ Intensität bei 25°C Probentemperatur) nicht vorliegen, können die Qualitätsparameter, insbesondere Stromdichte und Spannung für STC angegeben werden. Durch Ermittlung der variierenden Generationsstromdichten lässt sich der Einfluss ihrer Unterschiede in der Berechnung der Stromdichte als Qualitätsinformation berücksichtigen. Hierbei verändert sich insbesondere Gleichung (26') zu nachfolgend aufgeführter Gleichung (26"):

$$j(V) = j_{gen,STC} - j_{gen,h} + j_{gen,hom}* \phi_{TB1} / \phi_{hom} *(1-f)/f \qquad \text{Gleichung (26'')}$$

wobei

$$V = V_t * \ln(\phi_{TB1}/C) + f * V_t * \ln\{ j_{gen,h}/j_{gen,hom}*\phi_{hom}$$
$$/\phi_{TB1} - (1-f)/f\} - (j_{gen,STC} - j_{gen,TB2})* V_t/j_{gen,hom}$$
$$*\phi_{hom}/\phi_{TB1} * f * \ln\{ j_{gen,h}/j_{gen,hom}*\phi_{hom} /\phi_{TB1} - (1-f)/f\}$$

Hierbei entspricht $j_{gen,STC}$ der Generationsstromdichte bei vorliegenden Standard Test Conditions.

Im oben beschriebenen Fall, welcher die Standard Test Conditions betrifft, verändert sich die Gleichung (27') zu nachfolgend aufgeführter Gleichung (27").

$$j(V) = j_{gen,STC} - j_{gen,hom} *\phi_{TB2}/\phi_{hom} \qquad \text{Gleichung (27'')}$$

wobei

$$V = V_t * \ln(\phi_{TB2}/C) + V_t * \ln($$

$$j_{sc,TB2}/j_{sc,hom} * \phi_{hom}/\phi_{TB2} * f/(1-f) - f/(1-f)) * (1-f) * [1$$

$$+ (j_{sc,STC} - j_{sc,TB2}) / (j_{sc,TB2} - j_{sc,hom} * \phi_{TB2}/\phi_{hom})].$$

Es liegt im Rahmen dieser vorteilhaften Weiterbildung des Verfahrens, dass beliebig viele weitere Lumineszenzmessungen, insbesondere mindestens eine vierte Lumineszenzmessung, mit entsprechend beliebig vielen Parametervariationen und/oder Flächenvariationen durchführbar sind, um zu weiteren Stromdichten und Spannungen zu gelangen. Dadurch lässt sich die Stromdichte-Spannungs-Kennlinie über eine lineare Approximation hinaus auch durch nichtlineare Verläufe approximieren.

Durch Messung der qualitätsrelevanten Gesamtfläche lässt sich die approximierte Stromdichte-Spannungs-Kennlinie auf einfache Weise in eine Strom-Spannungs-Kennlinie umrechnen. Mit der Strom-Spannungs-Kennlinie ist der Höchstleistungspunkt der Solarzelle auf einfache Weise an dem Punkt ermittelbar, an dem die Kennlinie das Maximum des Produktes aus Strom (Stromstärke) und Spannung aufweist. Alle Kenngrößen und Kennlinien können in die Qualitätsinformation einfließen.

In einer vorteilhaften Weiterbildung des Verfahrens umfasst die Parametervariation mindestens eine Intensitätsvariation, sodass der fünfte Parametersatz sich in zumindest einer Intensität von zumindest einem Parametersatz der ersten und/oder zweiten Lumineszenzmessung unterscheidet, sodass eine serienwiderstandsfreie Suns-$V_{oc}$-Kennlinie zumindest teilweise ermittelt wird und ein flächenbezogener Serienwiderstand der Solarzelle in Abhängigkeit der ersten Intensität und der zweiten oder dritten Intensität ermittelt wird und vorzugsweise eine Strom-Spannungs-Kennlinie in Abhängigkeit des Serienwiderstandes und der serienwiderstandsfreien Suns-$V_{oc}$-Kennlinie ermittelt wird.

Wesentlich für diese Weiterbildung des Verfahrens ist, dass die Parametervariation eine Intensitätsvariation umfasst, sodass sich der fünfte Parametersatz sich in zumindest einer Beleuchtungsintensität von zumindest einem Parametersatz der ersten und/oder zweiten Lumineszenzmessung unterscheidet.

Wird zusätzlich mindestens eine vierte Lumineszenzmessung mit weiteren Intensitätsvariationen wiederholt, lässt sich eine vierte Intensität ermitteln und alle gemessenen Intensitäten in Abhängigkeit der Beleuchtungsintensität in einem gemeinsamen Graphen aufgetragen werden. Dadurch ergibt sich eine sog. Suns-PL-Kennlinie, deren Ermittlung grundsätzlich aus "Trupke, Thorsten & Bardos, RA & Abbott, Malcolm & Cotter, J. (2005). Suns-photoluminescence: Contactless determination of current-voltage characteristics of silicon wafers. Applied Physics Letters. 87. 10.1063/1.2034109." bekannt ist.

Befindet sich die Solarzelle bei Durchführung einer zusätzlichen Lumineszenzmessung unter Offenklemmbedingungen, lässt sich eine vierte Intensität $\phi_4$ unter Berücksichtigung des Zusammenhanges nach Gleichung (28) in Abhängigkeit einer variierenden Offenklemmspannung ausdrücken.

$$\phi_4 = C * \exp(V_{OC}/V_t) \qquad \text{Gleichung (28)}$$

Durch die Abhängigkeit der Intensität von der Offenklemmspannung, lassen sich die Intensitäten der Suns-PL-Kennlinie durch Umstellung der Gleichung (28) nach der Offenklemmspannung auf einfache Weise in eine Suns-$V_{oc}$-Kennlinie umrechnen. Diese stellt eine gängige Qualitätsinformation von Solarzellen dar. Die weitere Erkenntnis der Anmelderin, die dieser vorteilhaften Weiterbildung der Erfindung zugrunde liegt, ist darin begründet, dass der Serienwiderstand der Solarzelle anhand der ersten und zweiten gemessenen Intensität ermittelt werden kann.

Der ohmsche Widerstand, der dem Serienwiderstand der Solarzelle zugrundeliegt, lässt sich anhand des Ersatzschaltbildes einer inhomogen mit Anregungsstrahlung beaufschlagten Solarzelle beschreiben. Dabei gilt der Zusammenhang gemäß Gleichung (29).

$$r_s = (V_{TB1} - V_{TB2})/j_{TB1} \qquad \text{Gleichung (29)}$$

Dabei entspricht $r_s$ dem flächenbezogenen Serienwiderstand der Solarzelle, während die Differenz $(V_{TB1} - V_{TB2})$ auf Grundlage der Kirchhoffschen Maschenregel dem Spannungsabfall am flächenbezogenen Serienwiderstand entspricht. Vereinfachend wird hierbei angenommen, dass die Flächen der beiden Teilbereiche identisch sind und das erste Flächenverhältnis f=0,5 beträgt. Es liegt jedoch im Rahmen der vorteilhaften Weiterbildung des Verfahrens, dass das erste Flächenverhältnis f einen beliebigen Wert annehmen kann.

Auf Grundlage von Berechnungen der Anmelderin, die der vorteilhaften Weiterbildung des Verfahrens zugrunde liegen, ist es möglich, den rechtsseitigen Term der Gleichung (29) in Abhängigkeit der ersten und zweiten Intensität auszudrücken. Hierbei ist jedoch zu berücksichtigen, in welchen Teilbereichen die erste und zweite Intensität ermittelt wird und gemäß welcher Verfahrensvariante das Verfahren durchgeführt wird. Dies äußert sich in der nachfolgend beschriebenen Fallunterscheidung.

Wird die erste Intensität in dem ersten Teilbereich der Solarzelle ermittelt, welche in dem Ersatzschalbild gemäß Figur 1 oder 2 als erste Diode 4 repräsentiert ist, und die zweite Intensität in dem zweiten Teilbereich gemessen, welche durch die zweite Diode 5 repräsentiert ist, ergibt sich der flächenbezogene Serienwiderstand entsprechend dem Zusammenhang gemäß Gleichung (30).

$$r_s = V_t/j_{gen} * (\phi_2 + \phi_1)/2/\phi_1 * \ln(\phi_2/\phi_1) \qquad \text{Gleichung (30)}$$

Wird die erste Intensität in dem ersten Teilbereich der Solarzelle gemessen, welcher in dem Ersatzschalbild gemäß Figur 1 oder 2 durch die erste Diode 4 repräsentiert ist, und die zweite Intensität bei homogener Beaufschlagung der Solarzelle durch die zweite Lumineszenzmessung gemäß Alternative B, ergibt sich der flächenbezogene Serienwiderstand entsprechend dem Zusammenhang gemäß Gleichung (31).

$$r_s = V_t/j_{gen} * \ln(\phi_2/\phi_1 - 1) / 2 * (\phi_2/\phi_1) \qquad \text{Gleichung (31)}$$

Wird die erste Intensität in dem zweiten Teilbereich der Solarzelle gemessen, welcher in dem Ersatzschaltbild gemäß Figur 1 oder 2 durch die erste Diode 5 repräsentiert ist, und die zweite Intensität bei homogener Beaufschlagung der Solarzelle durch die zweite Lumineszenzmessung gemäß Alternative B, ergibt sich der flächenbezogene Serienwiderstand entsprechend dem Zusammenhang gemäß Gleichung (32).

$$r_s = V_t/j_{gen} * \ln(\phi_2/\phi_1 - 1) / 2 / (\phi_1/\phi_2 - 1) \qquad \text{Gleichung (32)}$$

Somit lässt sich der Serienwiderstand bei allen beschriebenen Alternativen für die Durchführung der ersten und zweiten Lumineszenzmessung in Abhängigkeit der ersten und zweiten Intensität ermitteln.

Für die Ermittlung des Serienwiderstandes ist es vorteilhaft, wenn die thermische Spannung $V_t$ und die Generationsstromdichte $j_{gen}$ gemäß den Gleichungen (30)-(32) geschätzt oder mittels Referenzmessungen für eine Vielzahl geprüfter Solarzellen ermittelt werden, sodass der Serienwiderstand eindeutig ermittelbar ist.

Die ermittelte Suns-$V_{oc}$-Kennlinie kann auf einfache Weise mit dem ermittelten Serienwiderstand in eine Strom-Spannungs-Kennlinie umgerechnet werden. Die Suns-$V_{oc}$-Kennlinie beschreibt zunächst den Zusammenhang zwischen Offenklemmspannung $V_{oc}$ und eingestrahlter Intensität E. Diese wird in eine Stromdichte-$V_{oc}$-Kennlinie umgerechnet, indem jeder Einstrahlung E eine Stromdichte j gemäß folgender Vorschrift zugeordnet wird.

$$j = (E-1) * j_{gen} \qquad \text{Gleichung (33)}$$

wobei $j_{gen}$ die Generations- oder Kurzschlusstromdichte beschreibt.

Anschließend wird aus der Offenklemmspannung $V_{oc}$ mit Hilfe der Stromdichte j und des Serienwiderstands $r_s$ die zugehörige Spannung V für die tatsächliche Strom-Spannungs-Kennlinie berechnet.

$$V = V_{oc} + r_s * j \qquad \text{Gleichung (34)}$$

In einer vorteilhaften Weiterbildung des Verfahrens erfolgt zusätzlich zu der ersten und der zweiten Lumineszenzmessung eine kontaktlose Reflektionsmessung an der Solarzelle, wobei die Solarzelle mit Anregungsstrahlung mit einer Mehrzahl von Wellenlängen beaufschlagt wird und eine von der Solarzelle reflektierte Strahlung gemessen wird, in deren Abhängigkeit eine spektrale Reflektion ermittelt wird, und die Qualitätsinformation von der ersten Intensität, der zweiten Intensität und der spektralen Reflektion abhängig ist.

Bei der Reflektionsmessung handelt es sich um ein kontaktloses Verfahren, bei dem nur eine geringe Zeit erforderlich ist, um die Solarzelle hinsichtlich ihrer Reflektivität in Form eines Reflektionsgrades zu charakterisieren. Die spektrale Reflektion beschreibt dabei den wellenlängenabhängigen Reflektionsgrad der Solarzelle. Die Ermittlung der spektralen Reflektion erlaubt es, abzuschätzen oder zu ermitteln, bei welchen Wellenlängen in der Beaufschlagung mit Anregungsstrahlung optische Verluste auftreten können.

In der einfachsten Ausführungsform wird die ermittelte spektrale Reflektion als zusätzlicher Parameter in die Qualitätsinformation einbezogen. Im Auswerteschritt kann die spektrale Reflektion in Kombination mit der ersten und zweiten Intensität verwenden werden, um die Solarzelle einer Qualitätsklasse zuzuordnen. Eine derartige Zuordnung kann in einfacher Weise durch eine beliebige Zuordnungsvorschrift, z.B. in Form einer Tabelle oder einer mathematischen Gleichung erfolgen.

In einer vorteilhaften Weiterbildung des Verfahrens, bei dem eine Reflektionsmessung durchgeführt wird, wird bei der Auswertung der Qualitätsinformation ein mathematisches Modell mittels einer Parametrierung an die spektrale Reflektion, genauer an die Escape-Reflektion angepasst, wobei ein wellenlängenabhängiger Generationsanteil der auf die Solarzelle auftreffenden Strahlung berechnet wird und der wellenlängenabhängige Generationsanteil mit einem vorgegebenen Anregungsspektrum mathematisch gefaltet wird und daraus eine Generationsstromdichte $j_{gen}$ ermittelt wird.

Bei dem mathematischen Modell kann es sich um eine wellenlängenabhängige Funktionsgleichung handeln, welche durch einen Satz an Parametern beschreibbar ist. Bedarfsweise kann dieses mathematische Modell zumindest teilweise einem Polynom beliebigen Grades entsprechen. Ebenso kann das Modell einen anderen vordefinierten Funktionstyp, z.B. in Form einer logistischen oder exponentiellen Funktion aufweisen. Anhand der ermittelten wellenlängenabhängigen spektralen Reflektion können für das mathematische Modell Randbedingungen vorgegeben werden, mit denen konkrete Werte oder Werteverläufe für die Parameter des mathematischen Modells bestimmt werden. Dadurch wird das mathematische Modell parametriert. Aus "P. A. Basore, "Extended spectral analysis of internal quantum efficiency," Conference Record of the Twenty Third IEEE Photovoltaic Specialists Conference - 1993 (Cat. No.93CH3283-9), Louisville, KY, USA, 1993, pp. 147-152, doi: 10.1109/PVSC.1993.347063." ist ein mathematisches Modell bekannt, welches eine hohe Eignung für eine Approximation der spektralen Reflektion aufweist.

Anhand des parametrierten mathematischen Modells lässt sich der wellenlängenabhängige Generationsanteil der auf die Solarzelle einfallenden Strahlung ermitteln. Dem liegt ein Vorgehen zugrunde, welches grundsätzlich aus "Fell, Andreas & Wirtz, Wiebke & Höffler, Hannes & Greulich, Johannes. (2019). Determining the Generation Rate of Silicon Solar Cells from Reflection and Transmission Measurements by Fitting an Analytical Optical Model. 3037-3041. 10.1109/PVSC40753.2019.8980730." bekannt ist.

Durch Faltung des wellenlängenabhängigen Generationsanteils mit dem Spektrum, entsprechend welchem die Solarzelle bei der Reflektionsmessung mit Anregungsstrahlung beaufschlagt wird, kann auf einfache Weise eine Generationsstromdichte ermittelt werden. Das Anregungsspektrum entspricht vorzugsweise einem vorgebbaren Lichtspektrum, vorzugsweise einem AM1,5-Spektrum, das zumindest teilweise dem Lichtspektrum der Sonne entspricht. Dadurch lassen sich bei der Reflektionsmessung Beleuchtungsbedingungen einstellen, welche auch in einem realen Feldbetrieb der Solarzelle vorliegen können. Die Anregungsstrahlung wird von einem Beleuchtungsmittel erzeugt, wobei unterschiedliche Arten von Beleuchtungsmitteln unterschiedliche Anregungsspektren erzeugen können. Die Eigenschaften des Anregungsspektrums lassen sich somit durch die Wahl eines Beleuchtungsmittels beeinflussen. Es liegt ebenso im Rahmen der vorteilhaften Weiterbildung, dass das Anregungsspektrum, insbesondere bei nicht hinreichend bekannten Spezifikationen eines Beleuchtungsmittels, angenommen, geschätzt oder mittels Spektrographie ermittelt wird.

Die Generationsstromdichte kann einerseits in die Qualitätsinformation einflie-ßen, andererseits jedoch auch in die Ermittlung der Stromdichten. Dadurch kann die Berechnung der Stromdichte als Qualitätsinformation der Solarzelle nicht in Abhängigkeit einer geschätzten Generationsstromdichte erfolgen, sondern in Abhängigkeit einer exakt bestimmten Generationsstromdichte.

In einer vorteilhaften Weiterbildung des Verfahrens erfolgt bei der Reflektionsmessung die Erzeugung der Anregungsstrahlung und/oder die Erfassung der reflektierten Strahlung zumindest teilweise mittels einer Ulbricht-Kugel. Ein Spektrometer erfasst zumindest die reflektierte Strahlung und gibt eine spektrale Reflektion aus, welche in dem Auswerteschritt mit dem Anregungsspektrum mathematisch gefaltet wird, um einen reflektierten Photonenstrom zu ermitteln, sodass die Qualitätsinformation von dem reflektierten Photonenstrom abhängig ist.

Die Ulbricht-Kugel stellt vorliegend eine Vorrichtung dar, welche einerseits teilweise zur Erzeugung einer diffusen Beleuchtung der Solarzelle und/oder andererseits zur Erfassung der reflektierten Strahlung dienen kann. Die Ulbricht-Kugel umfasst eine Hohlkugel, mit einer Lichteintritts- und einer Austrittsöffnung, welche in der Regel im rechten Winkel zueinander angeordnet sind. Die Innenseite der Hohlkugel ist mit einer diffus reflektierenden Oberfläche beschichtet, z.B. mit Bariumsulfat oder Polytetrafluorethylen.

Sofern die Ulbricht-Kugel zumindest teilweise dazu dient, eine Anregungsstrahlung für die Reflektionsmessung an der Solarzelle zu erzeugen, ist eine Strahlungsquelle vor der Lichteintrittsöffnung der Ulbricht-Kugel angeordnet. Die Strahlungsquelle erzeugt einen Lichtstrahl, der in die Ulbricht-Kugel eintritt, mehrfach an ihrer Innenseite reflektiert wird und als diffuse Anregungsstrahlung durch die Austrittsöffnung austritt. Die Austrittsöffnung weist in Richtung der Solarzelle, an welcher die Anregungsstrahlung für die Reflektionsmessung reflektiert wird.

Sofern die Ulbricht-Kugel zumindest teilweise dazu dient, eine reflektierte Strahlung zu erfassen, weist sie mit der Lichteintrittsöffnung in Richtung der Solarzelle, sodass die reflektierte Strahlung in die Ulbricht-Kugel eintritt und diese durch die Austrittsöffnung verlässt.

Es liegt im Rahmen der Erfindung, dass dieselbe Ulbricht-Kugel zumindest teilweise sowohl zur Erzeugung der Anregungsstrahlung als auch zur Erfassung der reflektierten Strahlung dient. In diesem Fall dienen die beschriebenen Öffnungen jeweils gleichzeitig sowohl als Eintritts- und als Austrittsöffnungen.

Das Spektrometer kann sowohl zur Ermittlung des Anregungsspektrums als auch zur Ermittlung der spektralen Reflektion genutzt werden. Durch Faltung des Anregungsspektrums und der spektralen Reflektion lässt sich der reflektierte Photonenstrom auf einfache Weise ermitteln. Dieser kann zusätzlich zu den bereits beschriebenen qualitätsrelevanten Kenngrößen der Solarzelle in die ermittelte Qualitätsinformation einfließen.

In einer vorteilhaften Weiterbildung der Reflektionsmessung erfolgt die Erzeugung der Anregungsstrahlung zumindest teilweise mittels mindestens einer Diode, vorzugsweise einer Dombeleuchtung mit einer Mehrzahl an Dioden. Eine optische Messvorrichtung erfasst die reflektierte Strahlung, mit der die spektrale Reflektion ermittelt wird. Mittels einer Kalibrierung der optischen Messvorrichtung wird in Abhängigkeit der spektralen Reflektion ein reflektierter Photonenstrom ermittelt.

Bei der Diode handelt es sich um eine lichtemittierende Diode (LED). Diese kann ein- oder mehrfarbig ausgestaltet sein. Ebenso kann eine Mehrzahl von LEDs vorgesehen sein, die jeweils dazu ausgestaltet sind, Anregungsstrahlung einer oder mehrerer Wellenlängen zu erzeugen. Durch geeignete Ansteuerung der Dioden lässt sich das Anregungsspektrum der Anregungsstrahlung auf einfache Weise einstellen, sodass die Anregungsstrahlung nicht mit einem Spektrometer oder einer ähnlichen Messvorrichtung erfasst werden muss. Stattdessen kann das Anregungsspektrum als eine einstellbare Größe ausgestaltet sein.

Die Mehrzahl der LEDs kann innerhalb der Dombeleuchtung angeordnet sein. Die Dombeleuchtung umfasst, ähnlich zum Aufbau der Ulbricht-Kugel, eine Halbschale mit einer diffus reflektierenden Oberfläche an ihrer konkaven Innenseite. Am Rand der Halbschale lässt sich die Mehrzahl der LEDs anordnen, mit der die Innenseite der Halbschale beleuchtet wird. Durch die diffuse Reflektion wird die Solarzelle großflächig mit Anregungsstrahlung einer oder mehrerer bestimmter Wellenlängen beaufschlagt.

Die optische Messvorrichtung kann in unmittelbarer Nähe der LED oder innerhalb der Dombeleuchtung in einem ausgesparten Teil der Hohlschale angeordnet sein. Die optische Messvorrichtung kann als Zeilen- oder Matrixkamera ausgestaltet sein. Vorteilhafterweise handelt es sich um dieselbe Zeilen- und Matrixkamera, welche zur Ermittlung der ersten und zweiten Teilfläche bei einer der durchgeführten Lumineszenzmessungen verwendet wird.

Die optische Messvorrichtung ist dazu ausgestaltet, die reflektierte Strahlung zu erfassen. Durch Synchronisation mit der Ansteuerung der LED und/oder Dombeleuchtung ist es insbesondere möglich, die reflektierte Strahlung in Abhängigkeit einer Wellenlänge zu erfassen. Dabei lässt sich die Intensität der reflektierten Strahlung ermitteln. Bei bekannter Beleuchtungsintensität, die bspw. durch einen gleichzeitig beleuchteten und detektierten Weiß- oder Graustandard bestimmt werden kann, lässt sich gemeinsam mit der Intensität der reflektierten Strahlung die spektrale Reflektion ermitteln.

Durch Kalibrierung der optischen Messvorrichtung kann anhand der spektralen Reflektion auf den reflektierten Photonenstrom geschlossen werden.

Der Vorteil in der Verwendung einer optischen Messvorrichtung zur Ermittlung der spektralen Reflektion und/oder des reflektierten Photonenstroms ist, dass einfach ausgestaltbare Mittel der optischen Messtechnik in Kombination mit digitaler Bildverarbeitung dazu genutzt werden können, eine Qualitätsinformation über die Solarzelle zu erheben.

In einer vorteilhaften Weiterbildung des Verfahrens umfasst die Parametervariation mindestens eine Wellenlängenvariation, sodass der fünfte Parametersatz bei der dritten Lumineszenzmessung sich in zumindest einer Wellenlänge, vorzugsweise einem Wellenlängenbereich, von zumindest einem Parametersatz der ersten und zweiten Lumineszenzmessung unterschiedet. In dem Auswerteschritt erfolgt eine Berechnung einer wellenlängenabhängigen absoluten internen Quanteneffizienz (aIQE) in Abhängigkeit einer relativen externen Quanteneffizienz (rEQE) und der spektralen Reflektion, wobei für zumindest eine variierte Wellenlänge, bevorzugt für einen variierten Wellenlängenbereich, besonders bevorzugt zwischen 600 und 800 nm, ein Wert, bevorzugt 1 = 100% für die absolute interne Quanteneffizienz vorgegeben wird und bevorzugt ausgehend von der absoluten internen Quanteneffizienz die absolute externe Quanteneffizienz bestimmt wird, in deren Abhängigkeit vorzugsweise eine Generationsstromdichte ermittelt wird.

Die relative externe Quanteneffizienz ergibt sich in grundsätzlich bekannter Weise anhand der ersten oder der zweiten Lumineszenzmessung bei inhomogener Beaufschlagung der Solarzelle mit Anregungsstrahlung. Dies ist aus "K. O. Davis et al.: Electroluminescence Excitation Spectroscopy: A Novel Approach to Non-Contact Quantum Efficiency Measurements; 2017 IEEE 44th Photovoltaic Specialist Conference (PVSC), Washington, DC, 2017, pp. 3448-3451, doi: 10.1109/PVSC.2017.8366170." bekannt. Vorteilhafterweise ist die erste Teilfläche dabei abgeschattet, während die zweite Teilfläche mit einer Intensität größer als Null W/m$^2$ beleuchtet ist, und die erste oder zweite Intensität in der ersten Teilfläche ermittelt wird. Bei bekannter Wellenlänge kann somit zunächst anhand der ersten oder zweiten Lumineszenzmessung die relative externe Quanteneffizienz in Abhängigkeit einer ersten Wellenlänge ermittelt werden.

Gemäß dieser vorteilhaften Weiterbildung des Verfahrens wird, entsprechend der bereits beschriebenen Vorgehensweise, eine Parametervariation durchgeführt, wobei die Wellenlänge zumindest des ersten, zweiten, dritten oder vierten Parametersatzes variiert wird. Daraus ergibt sich ein fünfter Parametersatz, welcher bei Durchführung der dritten Lumineszenzmessung anstelle des Parametersatzes tritt, dessen Wellenlänge verändert wurde. Die Möglichkeiten für die Parametervariation wurden in Bezug auf die grundlegenden Möglichkeiten zur Durchführung der dritten Lumineszenzmessung beschrieben und gelten analog für die Wellenlängenvariation.

Die Wellenlängenvariation hat zur Folge, dass zumindest die dritte bei einer anderen Wellenlänge gemessen wurde als die erste oder die zweite Intensität. Somit lässt sich anhand der dritten Intensität eine weitere relative externe Quanteneffizienz ermitteln. Daraus ergibt sich eine wellenlängenabhängige relative externe Quanteneffizienz.

Die wellenlängenabhängige relative externe Quanteneffizienz kann mittels Division mit einem Kennwert, welcher von der spektralen Reflektion abhängig ist, in eine wellenlängenabhängige relative interne Quanteneffizienz umgerechnet werden.

Anhand der wellenlängenabhängigen relativen internen Quanteneffizienz kann wiederum die absolute interne Quanteneffizienz ermittelt werden, indem angenommen wird, dass die relative interne Quanteneffizienz für zumindest eine Wellenlänge oder einen Wellenlängenbereich 100% beträgt. Hierbei handelt es sich um eine wichtige Erkenntnis der Anmelderin in Hinblick auf die vorteilhafte Weiterbildung des Verfahrens.

Mit der beschriebenen Annahme bezüglich der relativen internen Quanteneffizienz lässt sich diese linear in die absolute interne Quanteneffizienz umrechnen. Durch erneute Umrechnung mit einem Kennwert, der von der spektralen Reflektion abhängig ist, kann ausgehend von der absoluten internen Quanteneffizienz auf die absolute externe Quanteneffizienz geschlossen werden.

Die absolute externe Quanteneffizienz stellt einen Parameter dar, der in die Qualitätsinformation einer geprüften Solarzelle einfließen kann. Vorteilhafterweise lässt sich anhand der absoluten externen Quanteneffizienz die Kurzschlussstromdichte $j_{sc}$ oder die Generationsstromdichte $j_{gen}$ gemäß Gleichung (35) ermitteln.

$$j_{gen} = \int \varphi(\lambda) EQE(\lambda) d\lambda \qquad \text{Gleichung (35)}$$

Hierbei ist $\varphi(\lambda)$ ein auf die Solarzelle einfallender Photonenstrom und *EQE*$(\lambda)$ die ermittelte absolute externe Quanteneffizienz. Der auf die Solarzelle einfallende Photonenstrom kann der Photonenstrom gemäß dem AM1.5 Spektrum, geschätzt sein oder z.B. mittels einer Monitordiode ermitteln werden. Dadurch lässt sich die Generationsstromdichte $j_{gen}$ exakt bestimmen und für die Ermittlung einer Stromdichte verwendet werden, welche vorzugsweise eine Qualitätsinformation darstellen kann.

In einer weiteren Ausgestaltung des Verfahrens erfolgt der Auswerteschritt mit einer Modellgleichung und/oder einem Vorhersagemodell, um die Qualitätsinformation zu ermitteln.

Bei der Modellgleichung handelt es sich um eine Abbildungsvorschrift, die eine abstrakte Qualitätsinformation, z.B. einen Qualitätsgrad oder eine Qualitätsklasse und/oder eine konkrete Qualitätsinformation, z.B. Stromdichte oder Leistung zumindest in Abhängigkeit der ersten und der zweiten Intensität, ausgibt. Diese Abbildungsvorschrift kann z.B. durch ein Polynom repräsentiert sein. Dieses Polynom kann eine grundsätzlich beliebige Form aufweisen, welche durch einen Satz an Parametern bestimmt ist. Vor der Durchführung des Verfahrens zur Qualitätsbewertung können die Parameter z.B. unter Durchführung von Versuchen gemäß einem vollfaktoriellen Versuchsplan und anschließender Regression ermittelt werden.

Das Vorhersagemodell kann ganz oder teilweise anhand eines Machine Learning Algorithmus, empirischen Vorhersagemodellen, wie künstlichen (faltenden) neuronalen Netzen ermittelt sein. Diese können, ähnlich zu der Parametrierung der Modellgleichung, z.B. durch überwachtes Lernen (Training) ermittelt werden. Im Gegensatz zur Modellgleichung muss die Struktur des Vorhersagemodells nicht vorgegeben werden, sondern kann sich anhand des überwachten Lernens eigenständig ergeben.

Ein empirisches Vorhersagemodell beruht vorzugsweise auf Messpaaren aus jeweils einer Eingabe und einem Qualitätsparameter, welcher vorzugsweise eine Qualitätsinformation der Solarzelle repräsentiert. Das Vorhersagemodell weist eigene Modellparameter auf, die eine Abhängigkeit einer Qualitätsinformation von der Eingabe abbilden. In einer Lernphase werden die Modellparameter dahingehend optimiert, dass diese eine möglichst genaue Vorhersage der Qualitätsparameter in Abhängigkeit der Eingaben erlaubt. Hierbei wird ein Vorhersagefehler z.B. mittels numerischer Methoden wie Gradienten-Abstiegsverfahren reduziert. Ein trainiertes Modell kann daraufhin Qualitätsparameter in Abhängigkeit der Eingabe errechnen. Analytische Modelle können ebenfalls in den Berechnungsprozess integriert werden.

Das Vorhersagemodell kann aus einem reinen Lernmodell bestehen, das hinsichtlich einer oder mehrerer Qualitätsinformationen optimiert ist. Das Gesamtmodell besteht vorzugsweise aus einer Kombination von gelernten Modellen oder einer Kombination aus gelernten und analytischen Modellen. Hierbei sind die Ausgaben und Zwischenrechnungen der Modelle als Eingabe für weitere Modelle verwendbar. Diese Ergebnisse können selbst Qualitätsparameter sein, welche vorzugsweise eine Qualitätsinformation repräsentieren und zur Modelloptimierung herangezogen werden. Die Parameter des Gesamtmodells und aller Teilmodelle können auf Grund der Abweichung der Vorhersageergebnisse von den Qualitätsparametern optimiert werden. Die Teilmodelle sind vorzugsweise dazu ausgestaltet, physikalische Größen zu berechnen, die in Folgeschritten des Gesamtmodells weiterverwendet werden. Darüber hinaus können auch latente Modellparameter als Eingabeparameter in die Berechnungsschritte der Folgemodelle einfließen. Modelle können ebenso gemeinsame Parameter teilen. Die Messdaten können vor der Verarbeitung oder nach Zwischenrechnungen verknüpft werden, z.B. durch eine Konkatenation der Daten oder eine mathematische Verrechnung.

Empirische Modelle werden vorzugsweise aus analytischen Modellen oder Simualtionsmodellen abgeleitet.

Dies hat den Vorteil einer schnellen Berechnung, sowie der Beschreibung über eine ableitbare Funktion. Hierzu werden die analytischen Modelle oder Simulationsmodelle an Stützstellen ausgewertet und eine Funktion an die Daten gefittet. Ein solches Vorgehen ist bspw. aus Wasmer, Sven, Andreas A. Brand, and Johannes M. Greulich. "Metamodeling of numerical device simulations to rapidly create efficiency optimization roadmaps of monocrystalline silicon PERC cells." Energy Procedia 124 (2017): 207-214.bekannt. Die Modellfunktion kann Kalibrierparameter enthalten, die beim Training des Modells angepasst werden können.

Die Wahl der Abfolge mindestens der ersten und zweiten Lumineszenzmessung sowie die Ausprägungen der Parameter der dabei verwendeten Parametersätze, z.B. Ort der Abschattung, kann bezüglich der Vorhersagegenauigkeit des Modells optimiert werden.

Die Erfindung betrifft auch eine Vorrichtung zur kontaktlosen Qualitätsbewertung einer Solarzelle, mit einer ersten Messkonfiguration und einer zweiten Messkonfiguration, wobei die Vorrichtung in der ersten Messkonfiguration dazu ausgestaltet ist, mittels einer Strahlenquelle einen ersten Teilbereich der Solarzelle abzuschatten oder mit Anregungsstrahlung gemäß einem ersten Parametersatz zu beaufschlagen und einen zweiten Teilbereich der Solarzelle mit Anregungsstrahlung gemäß einem zu dem ersten Parametersatz unterschiedlichen, zweiten Parametersatz zu beaufschlagen und mittels einer Detektorvorrichtung eine erste Intensität einer von der Solarzelle emittierten Lumineszenzstrahlung im ersten Teilbereich oder im zweiten Teilbereich zu messen und wobei die Vorrichtung in der zweiten Messkonfiguration dazu ausgestaltet ist, mittels der Strahlenquelle den zweiten Teilbereich der Solarzelle mit Anregungsstrahlung gemäß einem zu dem ersten Parametersatz unterschiedlichen, dritten Parametersatz zu beaufschlagen und den ersten Teilbereich der Solarzelle abzuschatten oder mit Anregungsstrahlung gemäß dem ersten Parametersatz zu beaufschlagen und mittels der Detektorvorrichtung eine zweite Intensität im gegenüber der ersten Messkonfiguration jeweils anderen Teilbereich zu messen, oder wobei die Vorrichtung in der zweiten Messkonfiguration dazu ausgestaltet ist, mittels der Strahlenquelle die Solarzelle im ersten und zweiten Teilbereich homogen mit Anregungsstrahlung gemäß einem vierten Parametersatz zu beaufschlagen und die Detektorvorrichtung dazu ausgestaltet ist, die zweite Intensität im ersten Teilbereich und/oder dem zweiten Teilbereich zu messen, und wobei die Detektorvorrichtung mit einer Recheneinheit signaltechnisch verbunden ist, wobei die Recheneinheit dazu ausgestaltet ist, eine Qualitätsinformation in Abhängigkeit der ersten Intensität und der zweiten Intensität zu ermitteln.

Vorteilhafterweise ist die Vorrichtung zur Qualitätsbewertung dazu ausgestaltet, das erfindungsgemäße Verfahren auszuführen. In einer vorteilhaften Weiterbildung weist die Vorrichtung Mittel auf, die dazu ausgestaltet sich, um eine oder mehrerer vorteilhafte Weiterbildungen des erfindungsgemäßen Verfahrens durchzuführen.

Weitere bevorzugte Merkmale und Ausführungsformen des erfindungsgemäßen Verfahrens und der erfindungsgemäßen Vorrichtung werden im Folgenden anhand von Ausführungsbeispielen und den Figuren erläutert. Die Ausführungsbeispiele sind lediglich vorteilhafte Ausgestaltungen der Erfindung und nicht einschränkend.

Dabei zeigt:

Figur 1    ein erstes Ersatzschaltbild einer inhomogen mit Anregungsstrahlung beaufschlagten Solarzelle;

Figur 2    ein zweites Ersatzschaltbild einer inhomogen mit Anregungsstrahlung beaufschlagten Solarzelle;

Figur 3    eine erste Messkonfiguration einer Vorrichtung zur Qualitätsbewertung von Solarzellen;

Figur 4    eine zweite Messkonfiguration einer Vorrichtung zur Qualitätsbewertung von Solarzellen;

Figur 5    zwei Fertigungsstadien einer Solarzelle während einer Qualitätsbewertung;

Figur 6    ein Ersatzschaltbild einer homogen mit Anregungsstrahlung beaufschlagten Solarzelle;

Figur 7    eine dritte Messkonfiguration einer Vorrichtung zur Qualitätsbewertung von Solarzellen;

Figur 8    eine vierte Messkonfiguration einer Vorrichtung zur Qualitätsbewertung von Solarzellen;

Figur 1 zeigt ein Ersatzschaltbild einer unkontaktierten und inhomogen belichteten Solarzelle 1. Dieses basiert auf der modellhaften Annahme, dass die Solarzelle 1 eine dotierte Halbleiterstruktur mit einem pn-Übergang aufweist, sodass bei einer einfallenden Lichtstrahlung ein Stromfluss $I_{sc,h}$ erzeugt wird. Dies wird durch die Stromquelle 2 repräsentiert, welche den elektrischen Strom $I_{sc}$ mit einer ihm zugrundeliegenden Kurzschlussstromdichte $j_{sc}$ (auch Generationsstromdichte: $j_{gen}$) ausgibt.

Die Solarzelle 1 weist einen flächenbezogenen Serienwiderstand auf, der im Ersatzschaltbild der inhomogen beleuchteten Solarzelle durch den ohmschen Widerstand 3 repräsentiert ist.

Im gezeigten Ersatzschaltbild ist ein erster Teilbereich der Solarzelle abgeschattet, sodass die Solarzelle in diesem Bereich mit einer Anregungsstrahlungsintensität von annähernd 0 Watt pro Quadratmeter beleuchtet wird. Ein zweiter Teilbereich der Solarzelle ist mit einer Anregungsstrahlung beaufschlagt, die eine Intensität größer als 0 Watt pro Quadratmeter aufweist.

Infolge des Unterschieds in den Beleuchtungsintensitäten findet ein Stromfluss von dem zweiten Teilbereich der Solarzelle in den ersten Teilbereich der Solarzelle statt. Dabei repräsentiert eine erste Diode 4 zumindest teilweise den ersten Teilbereich der Solarzelle und Diode 5 zumindest teilweise den zweiten Teilbereich der Solarzelle.

Entsprechend der modellhaften Annahme, die dem Ersatzschaltbild gemäß Figur 1 zugrunde liegt, fließt der generierte Strom $I_{sc,h}$ zu einem Knoten 6 des Ersatzschaltbildes, an dem er auf den ersten und den zweiten Teilbereich aufgeteilt wird.

Der Anteil des Stromes $I_{sc,h}$, der durch Diode 4 fließt, weist eine Stromstärke $I_{dd}$ auf, die von der Stromdichte $j_{dd}$ in der Diode 4 und der abgeschatteten Fläche $A_d$ des ersten Teilbereichs abhängig ist. Es gilt Gleichung (36).

$$I_{dd} = A_d * j_{dd} \qquad\qquad \text{Gleichung (36)}$$

Für die Stromdichte $j_{dd}$ gilt Gleichung (37).

$$j_{dd} = j_0 * \exp(V_d/V_t) \qquad\qquad \text{Gleichung (37)}$$

Gemäß Gleichung (37) ist $j_0$ die Sättigungsstromdichte der Diode, $V_t$ die Thermische Spannung der Solarzelle, und $V_d$ die im abgeschatteten Teilbereich der Solarzelle anliegende Spannung.

Für den beleuchteten Teil der Solarzelle, welcher durch die Diode 5 repräsentiert wird, gilt für den Strom der Zusammenhang gemäß Gleichung (38), wobei $I_{dh}$ die Stromstärke des Stromes durch die zweite Diode ist, $A_h$ die Fläche des mit Anregungsstrahlung beaufschlagten zweiten Teilbereichs und $j_{dh}$ die Stromdichte des Stromes $I_{dh}$.

$$I_{dh} = A_h * j_{dh} \qquad\qquad \text{Gleichung (38)}$$

Für die Stromdichte $j_{dh}$ gilt Gleichung (39).

$$j_{dd} = j_0 * \exp(V_d/V_t) \qquad\qquad \text{Gleichung (39)}$$

Dabei ist $j_0$ die Sättigungsstromdichte der Diode, $V_t$ die thermische Spannung der Solarzelle, und $V_h$ die im beleuchteten zweiten Teilbereich der Solarzelle anliegende Spannung.

Um die Qualität der Solarzelle 1 zu ermitteln, werden unter Durchführung einer ersten Lumineszenzmessung und einer zweiten Lumineszenzmessung eine erste Intensität der Solarzelle und eine zweite Intensität der Solarzelle gemessen. Eine erste Möglichkeit besteht hierbei darin, die erste Intensität und die zweite Intensität bei der ersten Lumineszenzmessung bzw. der zweiten Lumineszenzmessung anhand der inhomogen belichteten Solarzelle durchzuführen.

Figur 2 zeigt ebenfalls ein Ersatzschaltbild einer inhomogen belichteten Solarzelle 1. Das Ersatzschaltbild gemäß Figur 2 ist analog zu dem Ersatzschaltbild gemäß Figur 1 aufgebaut, unterscheidet sich von diesem jedoch darin, dass anstelle eines ohmschen Widerstandes 3 zwei in Reihe geschaltete ohmsche Widerstände 3' und 3" angeordnet sind. Dies trägt der Erkenntnis der Anmelderin Rechnung, dass nicht lediglich der erste Teilbereich der Solarzelle serienwiderstandsbehaftet ist, sondern auch der zweite Teilbereich der Solarzelle. Insgesamt erhält das Ersatzschaltbild gemäß Figur 2 einen höheren Detailgrad als das Ersatzschaltbild gemäß Figur 1 und repräsentiert dadurch die tatsächlichen elektrischen Eigenschaften einer Solarzelle in einem höheren Maß als das Ersatzschaltbild gemäß Figur 1.

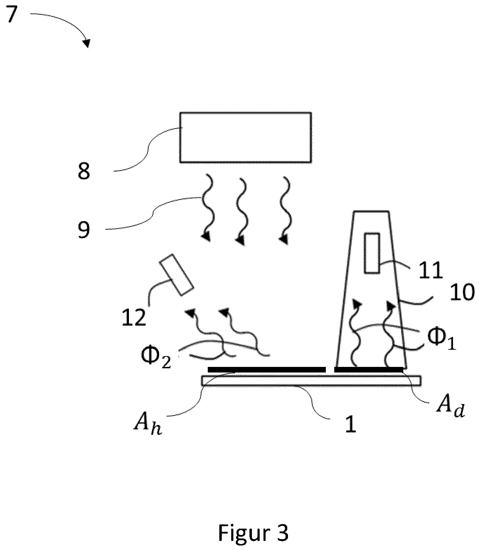

Figur 3 zeigt eine erste Messkonfiguration 7, mit der die erste Lumineszenzmessung und die zweite Lumineszenzmessung zeitgleich erfolgen. Dabei wird die Solarzelle 1 durch eine Beleuchtungsvorrichtung 8 mit Anregungsstrahlung 9 im zweiten Teilbereich beleuchtet, die eine Fläche aufweist, welche der der Teilfläche $A_h$ gemäß Figur 1 oder Figur 2 entspricht. Zudem ist die Solarzelle in einem anderen, ersten Teilbereich mit einem Kegelstumpf 10 abgeschattet, in dem ein Detektor in Form einer ersten InGaAs-Photodiode 11 angeordnet ist. Eine zweite InGaAs-Photodiode 12 ist im Bereich des hell beleuchteten Teilbereichs angeordnet.

In der gezeigten Messkonfiguration 7 weist die Fläche des ersten Teilbereiches $A_d$ im Verhältnis zu einer Gesamtfläche der Solarzelle ein Verhältnis 1-f auf, welches in einfacher Weise durch die Abmessungen des Kegelstumpfes 10 variiert werden kann.

Durch Beaufschlagung der Solarzelle 1 mit Anregungsstrahlung kommt es sowohl in der ersten als auch in der zweiten Teilfläche $A_d$ und $A_h$ der Solarzelle zur Emission von Lumineszenzstrahlung. Im ersten Teilbereich ist dabei die erste Intensität $\Phi_1$ messbar, während im zweiten Teilbereich die zweite Intensität $\Phi_2$ messbar ist. Die erste Intensität $\Phi_1$ wird von der ersten InGaAs-Photodiode 11 und die zweite Intensität $\Phi_2$ von der zweiten InGaAs-Photodiode 12 gemessen.

Auf Grundlage der modellhaften Annahmen zur inhomogen beleuchteten Solarzelle gemäß Figur 2 kann die Stromdichte j und die Spannung V der Stromdichte-Spannungs-Kennlinie in Abhängigkeit der gemessenen Intensitäten $\Phi_1$ und $\Phi_2$, dem Flächenverhältnis f und der Kurzschlussstromdichte $j_{sc}$ gemäß Gleichung (40) ermittelt werden.

$$j(V=V_m=f*V_t*\ln[\phi_2/C] + (1-f)*V_t*\ln[\phi_1/C]) = - j_{sc} * \quad \text{Gleichung (40)}$$
$$(1-f)/ (1-f + f* \phi_2/\phi_1 )$$

Die Kurzschlussstromdichte $j_{sc}$ (auch Generationsstromdichte $j_{gen}$) kann hierbei einem Schätzwert entsprechen oder mittels einer nicht gezeigten zusätzlich ausgeführten Reflektionsmessung ermittelt werden. Bei gleich großen Flächen $A_h$ und $A_d$ beträgt das Flächenverhältnis f gemäß Gleichung (40) 0,5.

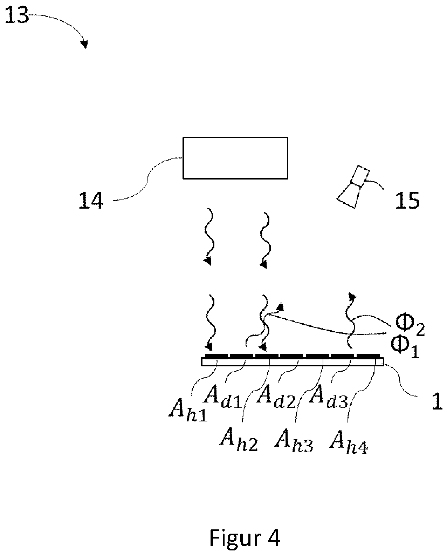

Figur 4 zeigt eine alternative Messkonfiguration 13, bei der die erste Lumineszenzmessung und die zweite Lumineszenzmessung ebenso wie in der ersten Messkonfiguration 7 innerhalb eines gemeinsamen Messschrittes erfolgen. Im Gegensatz zu Messkonfiguration 7 umfasst Messkonfiguration 13 eine Projektionsvorrichtung 14, mit der eine Segmentierung der Solarzelle in mehrere Teilbereiche erfolgen kann. Insbesondere lässt sich die Fläche $A_d$ des ersten Teilbereichs auf mehrere Teilflächen $A_{d1}$-$A_{d3}$ aufteilen und die Fläche $A_h$ des zweiten Teilbereiches in mehrere Teilflächen $A_{h1}$-$A_{h4}$ aufteilen.

Es ist wesentlich für das gezeigte Ausführungsbeispiel, dass die projizierten Teilflächen der Gruppe aus $A_{d1}$-$A_{d3}$ mit Anregungsstrahlung eines gemeinsamen Parametersatzes beaufschlagt werden, während die projizierten Teilflächen $A_{h1}$-$A_{h4}$ mit Anregungsstrahlung gemäß einem anderen Parametersatz beaufschlagt werden. Dadurch wird ein Stromfluss in der Solarzelle erzeugt, welcher entsprechend den Ausführungen bezüglich der Figuren 1 und 2 zwischen den Flächen $A_d$ und $A_h$ des ersten und zweiten Teilbereiches, sowie ihren jeweiligen Teilflächen fließt.

Eine Matrix- oder Zeilenkamera 15 ist dazu ausgestaltet, die Gesamtfläche der Solarzelle 1 zu erfassen. Dabei wird mittels eines integrierten Prozessors (nicht gezeigt) ermittelt, wie groß die Teilflächen $A_{d1}$-$A_{d3}$ sowie $A_{h1}$-$A_{h4}$ jeweils sind. Ebenso ist die Matrix- oder Zeilenkamera 15 dazu ausgestaltet, die Intensitäten $\Phi_1$ und $\Phi_2$ zu messen. Unter Berücksichtigung von Gleichung (40) lässt sich somit ebenso eine Stromdichte in Abhängigkeit der ersten und der zweiten Intensität und des Flächenverhältnisses f ermitteln. Durch Ermittlung der Flächen lässt sich die dabei ermittelte Stromdichte in einen Strom I umrechnen.

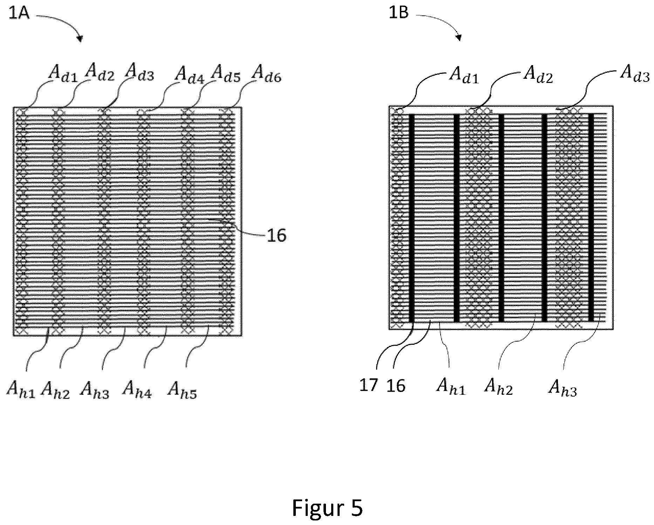

Die Projektionsvorrichtung 14 erlaubt eine flexible Einstellbarkeit der Parameter zur Beleuchtung der Solarzelle 1 sowie der jeweiligen Teilflächen $A_{d1}$-$A_{d3}$ und $A_{h1}$-$A_{h4}$. Eine derart flexible Einstellung kann insbesondere in verschiedenen Herstellungsstadien der Solarzelle 1 vorteilhaft sein. Wie sich dies auf die erste und zweite Lumineszenzmessung auswirkt, ist in Figur 5 gezeigt.

Figur 5 zeigt beispielhaft die Durchführung des Messverfahrens entsprechend der Messkonfiguration 13 an der Solarzelle 1, welche sich entsprechend zweier Fertigungsstadien in Form einer Solarzelle 1A oder einer Solarzelle 1B vorliegen kann.

Die Solarzelle 1A weist auf ihrer Oberfläche eine Mehrzahl an aufgebrachten Metallisierungsfingern 16 auf. Diese dienen dazu, einen generierten Strom abführen zu können. Im Gegensatz zu Figur 3 ist die projizierte Teilfläche $A_h$ in fünf Segmente $A_{h1}$-$A_{h5}$ unterteilt. Die projizierte Teilfläche $A_d$ ist in sechs Segmente $A_{d1}$-$A_{d6}$ unterteilt. In der gezeigten Anordnung ergibt sich ein Streifenmuster, welches sich durch die Gesamtheit aller Segmente ergibt. Die Metallisierungsfinger 16 verlaufen quer zu allen projizierten Segmenten $A_{h1}$-$A_{h5}$ und $A_{d1}$-$A_{d6}$.

Die Solarzelle 1B weist auf ihrer Oberfläche neben den Metallisierungsfingern 16 insgesamt fünf Busbars 17 auf. Im Gegensatz zur Qualitätsprüfung der Solarzelle 1A wird bei der Projektion der Segmente, aus denen sich die Teilflächen $A_d$ und $A_h$ zusammensetzen, die Position der Busbars berücksichtigt. Dies wirkt sich einerseits auf die Anzahl und andererseits die Position der Segmente aus, sodass die Teilfläche $A_d$ drei Segmente $A_{d1}$-$A_{d3}$ aufweist, welche in Form von Streifen parallel zu den Busbars 17 verlaufen. Die Teilfläche $A_h$ umfasst ebenso drei streifenförmige Segmente $A_{h1}$-$A_{h3}$, welche ebenso parallel zu den Busbars verlaufen. Die Segmente sind jeweils durch zwei Busbars seitlich 17 begrenzt. Dies hat zum Vorteil, dass ein Stromfluss innerhalb der Solarzelle 1 eine Injektion bzw. Extraktion von Ladungsträgern an den Busbars 17 bewirkt.

Alternativ zu der Qualitätsbewertung entsprechend den Beschreibungen zu den Figuren 1 bis 5, lässt sich eine Solarzelle unter homogener Beaufschlagung mit Anregungsstrahlung prüfen. Den dabei erforderlichen Auswerteschritten liegt eine modellhafte Annahme zu einer homogen mit Anregungsstrahlung beaufschlagen Solarzelle zugrunde, welche sich in ihrem Ersatzschalbild von den Ersatzschaltbildern gemäß Figur 1 und Figur 2 unterscheidet. Dies ist in Figur 6 zu sehen.

Der beleuchtete Bereich der homogen mit Anregungsstrahlung beaufschlagten Solarzelle 1 ist durch eine Stromquelle 2 repräsentiert. Der Stromfluss der Stromquelle 2 gibt somit den Generationsstrom wieder, welcher durch Absorption der Anregungsstrahlung und Ladungsträgertrennung in der Solarzelle generiert wird. Eine dritte Diode 18 ist zu der Stromquelle 2 parallelgeschaltet.

An den Elektroden der Solarzelle 1 liegt zwar eine Spannung, die sog. Offenklemmspannung $V_{oc}$ (auch:

Leerlaufspannung) an, jedoch fließt kein externer Strom. Die in der Solarzelle durch Absorption der Anregungsstrahlung erzeugten Ladungsträgerpaare rekombinieren näherungsweise im Wesentlichen am gleichen Ort, so dass unter Vernachlässigung erheblicher lokaler Defekte keine oder nur Ströme geringer Stromstärke in der Solarzelle unter Offenklemmbedingung fließen. Dies ist durch den Strom $I_d$ der durch die Diode 18 fließt, repräsentiert. Der Strom $I_d$ hat dabei eine Stromdichte $j_d$.

Aufgrund der Annahme, dass zwischen den Elektroden der Solarzelle kein Strom fließt, fließt aufgrund der Parallelschaltung der dritten Diode 18 und der Stromquelle 2 der gesamte Generationsstrom $I_{sc}$ in guter Näherung durch die dritte Diode 18. Dies bedeutet, dass die Ladungsträger des Stromes $I_{sc}$ im beleuchteten Bereich der Solarzelle 1 rekombinieren. Dies wird durch einen Diodenstrom $I_d$ mit einer Stromdichte $j_d$ repräsentiert, welcher durch eine Diode 18 fließt.

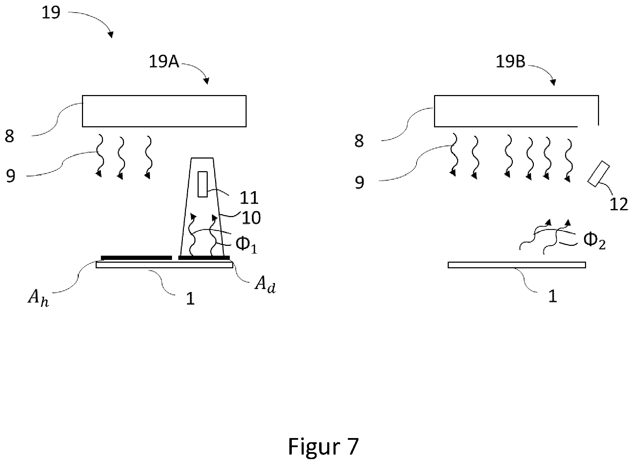

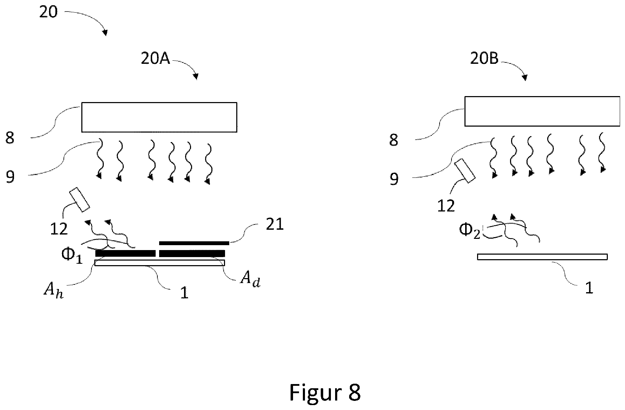

Für die Ermittlung der Qualität der Solarzelle ist die homogen mit Anregungsstrahlung beaufschlagte Solarzelle von Relevanz, da die erste Lumineszenzmessung anhand einer inhomogen beleuchteten Solarzelle durchgeführt werden kann, während die zweite Lumineszenzmessung bei homogener Beleuchtung der Solarzelle durchführbar ist. Wie dies realisiert sein kann ist in den Figuren 7 und 8 gezeigt.

Figur 7 zeigt eine Messkonfiguration 19, bei der die erste Lumineszenzmessung und die zweite Lumineszenzmessung in einer ersten Teilkonfiguration 19A bzw. einer zweiten Teilkonfiguration 19B durchgeführt wird.

Die erste Teilkonfiguration 19A weist in ihrem Aufbau eine hohe Ähnlichkeit zur Messkonfiguration 7 gemäß Figur 3 auf. Im Unterschied zur Messkonfiguration 7 weist die erste Teilkonfiguration 19A lediglich eine InGaAs-Photodiode 11 auf, welche im Kegelstumpf 10 angeordnet ist. Durch Beaufschlagung der Solarzelle 1 mit Anregungsstrahlung 9 wird ein Stromfluss erzeugt, der zu einer Lumineszenz der Solarzelle in der Teilfläche $A_d$ führt, die durch den Kegelstumpf abgeschattet ist. Im Verhältnis zur Gesamtfläche der Solarzelle ergibt sich ein Flächenverhältnis f. Die erste Intensität der Lumineszenz $\Phi_1$ wird durch die InGaAs-Photodiode 11 gemessen.

Nach Messung der ersten Intensität $\Phi_1$ wird der Kegelstumpf 10 samt der InGaAs-Photodiode 11 entfernt und durch die zweite InGaAs-Photodiode 12 ersetzt. Dadurch ergibt sich Messkonfiguration 19B. In dieser wird die Solarzelle 1 ganzflächig mit Anregungsstrahlung 9 beaufschlagt und somit homogen beleuchtet. Die zweite Intensität $\Phi_2$ der dabei erzeugten Lumineszenzstrahlung wird durch die zweite InGaAs-Photodiode 12 gemessen.

Die Stromdichte des Stromes und die Spannung der Stromdichte-Spannungs-kennlinie lassen sich entsprechend des Zusammenhanges gemäß Gleichung (41) in Abhängigkeit der gemessenen ersten Intensität und der zweiten Intensität ermitteln.

$$j(V= V_t*ln[\phi_1/C] + f* V_t*ln[\phi_2/\phi_1-(1-f)/f]) = - j_{sc}*\ \phi_1/\ \phi_2 \qquad \text{Gleichung (41)}$$
$$*\ (1-f)/f$$

Die Kurzschlussstromdichte $j_{sc}$ (auch Generationsstromdichte $j_{gen}$) kann analog zu der Ausführung bezüglich Gleichung (40) einem Schätzwert entsprechen oder mittels einer nicht gezeigten zusätzlich ausgeführten Reflektionsmessung ermittelt werden. Bei gleich großen Flächen $A_h$ und $A_d$ beträgt das Flächenverhältnis f gemäß Gleichung (41) 0,5.

Figur 8 zeigt eine andere Messkonfiguration 20, bei der die erste Lumineszenzmessung und die zweite Lumineszenzmessung in jeweils einer dritten Teilkonfiguration 20A bzw. einer vierten Teilkonfiguration 20B erfolgt.

Die dritte Teilkonfiguration 20A weist in ihrem Aufbau ebenfalls eine hohe Ähnlichkeit zur Messkonfiguration 7 gemäß Figur 3 auf. Im Unterschied zur Messkonfiguration 7 weist die dritte Teilkonfiguration 20A lediglich eine InGaAs-Photodiode 12 auf, welche in einem beleuchteten Bereich der inhomogen mit Anregungsstrahlung beaufschlagten Solarzelle angeordnet ist.

In der dritten Teilkonfiguration 20A ist die Solarzelle in einem Bereich mittels einer Schattenmaske 21 abgeschattet.

Durch Beaufschlagung der Solarzelle 1 mit Anregungsstrahlung 9 wird ein Stromfluss erzeugt, der zu einer Lumineszenz der Solarzelle in der Teilfläche $A_h$ führt. Die erste Intensität der Lumineszenz $\Phi_1$ wird durch die InGaAs-Photodiode 12 gemessen.

In der vierten Teilkonfiguration 20B wird die Schattenmaske 20 entfernt und die Solarzelle mittels der Beleuchtungsvorrichtung 8 homogen mit Anregungsstrahlung 9 beaufschlagt. Die zweite Intensität $\Phi_2$ kann hierbei in einem beliebigen Bereich der Solarzelle gemessen werden.

Zur Berechnung der Stromdichte und der Spannung gilt der Zusammenhang gemäß Gleichung (42).

$$j(V = V_t*ln[\phi_1/C] + (1-f)* V_t*ln[f/(1-f)*(1+\phi_2/\phi_1)]) = \qquad \text{Gleichung (42)}$$
$$- j_{sc}*[1 -\phi_1/\phi_2]$$

Unabhängig von den gezeigten Ausführungsbeispielen können die in den Figuren 1-8 beschriebenen Messprinzipien unter Variation der Parameter, gemäß denen die Anregungsstrahlung erzeugt wird, wiederholt werden.

Dies erlaubt neben der beschriebenen Ermittlung einer Stromdichte und einer Spannung an einem Arbeitspunkt die Ermittlung mehrerer Stromdichten und Spannungen an entsprechen mehreren Arbeitspunkten.

Dadurch lässt sich zumindest eine Stromdichte-Spannungs-Kennlinie ermitteln. Zusätzlich kann neben der ersten und der zweiten Lumineszenzmessung zumindest eine Reflektionsmessung durchgeführt werden. In Kombination mit einem ermittelbaren wellenlängenabhängigen Reflektionsgrad in Form einer spektralen Reflektion kann die Generationsstromdichte $j_{gen}$ sowie weitere Qualitätskenngrö-ßen der Solarzelle ermittelt werden.

## Patentansprüche

1. Verfahren zur kontaktlosen Qualitätsbewertung einer Solarzelle (1), bei dem eine erste Lumineszenzmessung durchgeführt wird, wobei ein erster Teilbereich der Solarzelle (1) mit Anregungsstrahlung gemäß einem ersten Parametersatz beaufschlagt wird und ein zweiter Teilbereich der Solarzelle (1) mit Anregungsstrahlung gemäß einem zu dem ersten Parametersatz unterschiedlichen zweiten Parametersatz beaufschlagt wird und eine erste Intensität ($\Phi_1$) einer von der Solarzelle (1) emittierten Lumineszenzstrahlung in dem ersten Teilbereich oder dem zweiten Teilbereich gemessen wird und

   zumindest eine zweite Lumineszenzmessung durchgeführt wird, wobei eine zweite Intensität ($\Phi_2$) einer von der Solarzelle (1) emittierten Lumineszenzstrahlung gemessen wird, wobei
   gemäß einer Alternative A der erste Teilbereich der Solarzelle (1) gemäß dem ersten Parametersatz mit Anregungsstrahlung beaufschlagt wird und der zweite Teilbereich der Solarzelle (1) mit Anregungsstrahlung gemäß einem zu dem ersten Parametersatz unterschiedlichen dritten Parametersatz beaufschlagt wird und die zweite Intensität ($\Phi_2$) in demjenigen Teilbereich gemessen wird, in welchem die erste Intensität ($\Phi_1$) bei der ersten Lumineszenzmessung nicht gemessen wird,
   oder
   gemäß einer Alternative B die Solarzelle (1) in dem ersten und dem zweiten Teilbereich homogen mit Anregungsstrahlung gemäß einem vierten Parametersatz beaufschlagt wird und die zweite Intensität ($\Phi_2$) in dem ersten Teilbereich und/oder dem zweiten Teilbereich gemessen wird und in einem Auswerteschritt eine globale, ortsunabhängige Qualitätsinformation in Abhängigkeit der ersten Intensität ($\Phi_1$) und der zweiten Intensität ($\Phi_2$) ermittelt wird.

2. Verfahren nach Anspruch 1,
   **dadurch gekennzeichnet, dass**
   die erste Lumineszenzmessung eine erste Einzelmessung umfasst, bei der die erste Intensität ortsunabhängig in dem ersten oder dem zweiten Teilbereich gemessen wird, und dass die zweite Lumineszenzmessung eine zweite Einzelmessung umfasst, bei der die zweite Intensität ortsunabhängig und gemäß Alternative A in demjenigen Teilbereich gemessen wird, in dem die erste Intensität nicht gemessen wurde, oder gemäß Alternative B in dem ersten Teilbereich und/oder dem zweiten Teilbereich gemessen wird, wobei die erste und die zweite Intensität jeweils als ortsunabhängiger Intensitätswert vorliegen und die Qualitätsinformation als orts-unabhängige Qualitätsinformation über die gesamte Solarzelle ermittelt wird.

3. Verfahren nach Anspruch 1 oder 2,
   **dadurch gekennzeichnet, dass**
   der erste Parametersatz eine erste Beleuchtungsintensität umfasst und der zweite und/oder dritte und/oder vierte Parametersatz jeweils mindestens eine zweite Beleuchtungsintensität umfassen und die erste Beleuchtungsintensität sich von der zweiten Beleuchtungsintensität unterscheidet, wobei die erste Beleuchtungsintensität vorzugsweise 0 Watt pro Quadratmeter beträgt, sodass der erste Teilbereich bei der ersten Lumineszenzmessung und bei der zweiten Lumineszenzmessung gemäß Alternative A nicht beleuchtet, insbesondere abgeschattet wird und die zweite Beleuchtungsintensität größer ist als 30 Watt pro Quadratmeter, weiter vorzugsweise größer 50 Watt pro Quadratmeter, höchst vorzugsweise größer 1000 Watt pro Quadratmeter.

4. Verfahren nach Anspruch 1 bis 3,
   **dadurch gekennzeichnet, dass**
   in dem Auswerteschritt eine Stromdichte (j) und/oder eine Spannung (V) an einem Arbeitspunkt der Solarzelle ermittelt wird, wobei die Stromdichte (j) und die Spannung (V) von der ersten Intensität ($\Phi_1$) und/oder der zweiten Intensität ($\Phi_2$) abhängig sind.

**5.** Verfahren nach Anspruch 4,
**dadurch gekennzeichnet, dass**
die Stromdichte (j) und/oder die Spannung (V) in Abhängigkeit von einem ersten Flächenverhältnis (f) ermittelt wird, das von einem Verhältnis einer mit Anregungsstrahlung beaufschlagten Fläche ($A_d$) des ersten Teilbereiches oder einer mit Anregungsstrahlung beaufschlagten Fläche ($A_h$) des zweiten Teilbereiches zu einer qualitätsrelevanten Gesamtfläche (A) der Solarzelle (1) abhängig ist insbesondere, dass der erste Teilbereich in Form mindestens eines ersten Streifens und der zweite Teilbereich in Form mindestens eines zweiten Streifens ausgestaltet ist, wobei zumindest der erste oder der zweite Streifen durch Projektion infolge der Beaufschlagung der Solarzelle mit Anregungsstrahlung erzeugt wird.

**6.** Verfahren nach Anspruch 4 oder 5,
**dadurch gekennzeichnet, dass**
die Gesamtfläche (A) der Solarzelle sowie vorzugsweise die Fläche des ersten Teilbereiches ($A_d$) und die Fläche des zweiten Teilbereiches ($A_h$), mit einer optischen Messvorrichtung (11,12), insbesondere einer Matrix- oder Zeilenkamera (15), gemessen wird und die Stromdichte (j) in eine Stromstärke (I), sowie die Leistungsdichte (p) in eine Leistung (P) umgerechnet wird.

**7.** Verfahren nach einem der Ansprüche 5 bis 6,
**dadurch gekennzeichnet, dass**
spätestens nach der ersten und der zweiten Lumineszenzmessung eine Parametervariation und/oder eine Flächenvariation durchgeführt und zusätzlich zu der ersten und zweiten Lumineszenzmessung zumindest eine dritte Lumineszenzmessung durchgeführt wird, wobei eine dritte Intensität $\Phi_3$ einer von der Solarzelle (1) emittierten Lumineszenzstrahlung gemessen wird, und wobei die dritte Lumineszenzmessung entsprechend der ersten Lumineszenzmessung oder der zweiten Lumineszenzmessung gemäß Alternative A oder B durchgeführt wird, wobei die dritte Lumineszenzmessung mit einem gegenüber der ersten und/oder der zweiten Lumineszenzmessung unterschiedlichen fünften Parametersatz und/oder einem zweiten Flächenverhältnis durchgeführt wird, und in dem Auswerteschritt ein Stromdichteverlauf, insbesondere eine Stromdichte-Spannungs-Kennlinie, vorzugsweise eine Strom-Spannungs-Kennlinie, höchstvorzugsweise ein Höchstleistungspunkt ermittelt wird, welche in die Qualitätsinformation einfließen.

**8.** Verfahren nach Anspruch 7,
**dadurch gekennzeichnet, dass**
die Parametervariation mindestens eine Intensitätsvariation umfasst, sodass der fünfte Parametersatz sich in zumindest einer Intensität von zumindest einem Parametersatz der ersten und/oder zweiten Lumineszenzmessung unterscheidet, sodass eine serienwiderstandsfreie Suns-$V_{oc}$-Kennlinie zumindest teilweise ermittelt wird und ein flächenbezogener Serienwiderstand der Solarzelle in Abhängigkeit der ersten Intensität und der zweiten oder dritten Intensität ermittelt wird und vorzugsweise eine Strom-Spannungs-Kennlinie in Abhängigkeit des Serienwiderstandes und der serienwiderstandsfreien Suns-$V_{oc}$-Kennlinie ermittelt wird.

**9.** Verfahren nach einem der voranstehenden Ansprüche,
**dadurch gekennzeichnet, dass**
zusätzlich zu der ersten und der zweiten Lumineszenzmessung eine kontaktlose Reflektionsmessung an der Solarzelle (1) erfolgt, wobei die Solarzelle mit Anregungsstrahlung mit einer Mehrzahl von Wellenlängen beaufschlagt wird und eine von der Solarzelle reflektierte Strahlung gemessen wird, in deren Abhängigkeit ein wellenlängenabhängiger Reflektionsgrad oder eine spektrale Reflektion ermittelt wird, und in dem Auswerteschritt die Qualitätsinformation in Abhängigkeit der ersten Intensität, der zweiten Intensität und der spektralen Reflektion ermittelt wird.

**10.** Verfahren nach Anspruch 9,
**dadurch gekennzeichnet, dass**
bei der Auswertung der Qualitätsinformation ein mathematisches Modell mittels einer Parametrierung an die spektrale Reflektion angepasst wird und ein wellenlängenabhängiger Generationsanteil der auf die Solarzelle einfallenden Anregungsstrahlung berechnet wird und der wellenlängenabhängige Generationsanteil mit einem Anregungsspektrum mathematisch gefaltet wird und daraus eine Generationsstromdichte $j_{gen}$ ermittelt wird.

**11.** Verfahren nach Anspruch 9 oder 10,
**dadurch gekennzeichnet, dass**
bei der Reflektionsmessung die Erzeugung der Anregungsstrahlung und/oder die Erfassung der reflektierten Strahlung zumindest teilweise mittels einer Ulbricht-Kugel erfolgt und ein Spektrometer zumindest die reflektierte Strahlung erfasst und eine spektrale Reflektion ausgibt, welche in dem Auswerteschritt mit einem Anregungsspektrum der Anregungsstrahlung mathematisch gefaltet wird, um einen reflektierten Photonenstrom zu ermitteln, sodass die Qualitätsinformation von dem reflektierten Photonenstrom abhängig ist.

12. Verfahren nach einem der Ansprüche 9 bis 11,
**dadurch gekennzeichnet, dass**
bei der Reflektionsmessung die Erzeugung der Anregungsstrahlung zumindest teilweise mittels einer Diode, vorzugsweise einer Dombeleuchtung mit einer Mehrzahl an Dioden, erfolgt und eine optische Messvorrichtung, vorzugsweise die optische Messvorrichtung gemäß Anspruch 7, die reflektierte Strahlung erfasst, mit welcher reflektierten Strahlung eine spektrale Reflektion ermittelt wird und mittels einer Kalibrierung der optischen Messvorrichtung ein reflektierter Photonenstroms ermittelt.

13. Verfahren nach Anspruch 7 und einem der Ansprüche 9 bis 12,
**dadurch gekennzeichnet, dass**
die Parametervariation mindestens eine Wellenlängenvariation umfasst, sodass der fünfte Parametersatz bei der dritten Lumineszenzmessung sich in zumindest einer Wellenlänge, vorzugsweise einem Wellenlängenbereich, von zumindest einem Parametersatz der ersten und zweiten Lumineszenzmessung unterschiedet und in dem Auswerteschritt eine Berechnung einer wellenlängenabhängigen absoluten internen Quanteneffizienz (aIQE) in Abhängigkeit einer relativen externen Quanteneffizienz (rEQE) und der spektralen Reflektion erfolgt, wobei für zumindest eine variierte Wellenlänge, bevorzugt für einen variierten Wellenlängenbereich, ein Wert für die absolute interne Quanteneffizienz vorgegeben wird und bevorzugt ausgehend von der absoluten internen Quanteneffizienz die absolute externe Quanteneffizienz bestimmt wird, in deren Abhängigkeit vorzugsweise eine Generationsstromdichte ermittelt wird.

14. Verfahren nach einem der voranstehenden Ansprüche,
**dadurch gekennzeichnet, dass**
die Auswertung der Qualitätsinformation im Auswerteschritt eine Modellgleichung und/oder ein Vorhersagemodell verwendet, um die Qualitätsinformation zu ermitteln.

15. Vorrichtung zur kontaktlosen Qualitätsbewertung einer Solarzelle (1), mit einer ersten Messkonfiguration (7,13,19,20) und einer zweiten Messkonfiguration (7,13,19,20), wobei die Vorrichtung in der ersten Messkonfiguration (7,13,19,20) dazu ausgestaltet ist, einen ersten Teilbereich der Solarzelle (1) abzuschatten oder mittels einer Strahlenquelle mit Anregungsstrahlung gemäß einem ersten Parametersatz zu beaufschlagen und einen zweiten Teilbereich der Solarzelle (1) mit Anregungsstrahlung gemäß einem zu dem ersten Parametersatz unterschiedlichen, zweiten Parametersatz zu beaufschlagen und mittels einer Detektorvorrichtung (11,12) eine erste Intensität ($\Phi_1$) einer von der Solarzelle (1) emittierten Lumineszenzstrahlung im ersten Teilbereich oder im zweiten Teilbereich zu messen und wobei die Vorrichtung in der zweiten Messkonfiguration dazu ausgestaltet ist, mittels der Strahlenquelle den zweiten Teilbereich der Solarzelle (1) mit Anregungsstrahlung gemäß einem zu dem ersten Parametersatz unterschiedlichen, dritten Parametersatz zu beaufschlagen und den ersten Teilbereich der Solarzelle (1) abzuschatten oder mit Anregungsstrahlung gemäß dem ersten Parametersatz zu beaufschlagen und mittels der Detektorvorrichtung (11,12) eine zweite Intensität ($\Phi_2$) im gegenüber der ersten Messkonfiguration jeweils anderen Teilbereich zu messen, oder wobei die Vorrichtung in der zweiten Messkonfiguration dazu ausgestaltet ist, mittels der Strahlenquelle die Solarzelle (1) im ersten und zweiten Teilbereich homogen mit Anregungsstrahlung gemäß einem vierten Parametersatz zu beaufschlagen und die Detektorvorrichtung (11,12) dazu ausgestaltet ist, die zweite Intensität im ersten Teilbereich und/oder dem zweiten Teilbereich zu messen, und wobei die Detektorvorrichtung (11,12) mit einer Recheneinheit signaltechnisch verbunden ist, wobei die Recheneinheit dazu ausgestaltet ist, eine globale, orts-unabhängige Qualitätsinformation in Abhängigkeit der ersten Intensität und der zweiten Intensität zu ermitteln.

## Claims

1. Method for contactlessly assessing the quality of a solar cell (1), in which a first luminescence measurement is performed, wherein a first sub-region of the solar cell (1) is impinged on by excitation radiation in accordance with a first set of parameters and a second sub-region of the solar cell (1) is impinged on by excitation radiation in accordance with a second set of parameters, different from the first set of parameters, and a first intensity ($\phi_1$) of luminescent radiation emitted by the solar cell (1) in the first sub-region or the second sub-region is measured, and

at least one second luminescence measurement is performed, wherein a second intensity ($\phi_2$) of luminescent radiation emitted by the solar cell (1) is measured, wherein

in accordance with an alternative A, the first sub-region of the solar cell (1) is impinged on by excitation radiation in accordance with the first set of parameters and the second sub-region of the solar cell (1) is impinged on by excitation radiation in accordance with a third set of parameters, different from the first set of parameters, and the second intensity ($\phi_2$) is measured in the sub-region in which the first intensity ($\phi_1$) is not measured in the first luminescence measurement,

or

in accordance with an alternative B, the solar cell (1) is impinged on homogeneously by excitation radiation in the first and second sub-regions in accordance with a fourth set of parameters and the second intensity ($\phi_2$) is measured in the first sub-region and/or the second sub-region and, in an evaluation step, global, location-dependent quality information is determined as a function of the first intensity ($\phi_1$) and the second intensity ($\phi_2$).

2. Method according to claim 1,
**characterized in that**
the first luminescence measurement comprises a first individual measurement, in which the first intensity is measured spatially-independently in the first or the second sub-region, and **in that** the second luminescence measurement comprises a second individual measurement, in which the second intensity is measured spatially-independently and, in accordance with alternative A, is measured in the sub-region in which the first intensity has not been measured, or, in accordance with alternative B, is measured in the first sub-region and/or the second sub-region, wherein the first and the second intensity are each present as a spatially-independent intensity value and the quality information is determined as spatially-independent quality information regarding the entire solar cell.

3. Method according to claim 1 or 2,
**characterized in that**
the first set of parameters comprises a first illumination intensity and the second and/or third and/or fourth set(s) of parameters each comprise(s) at least one second illumination intensity, and the first illumination intensity is different from the second illumination intensity, wherein the first illumination intensity is preferably 0 W per square meter, such that the first sub-region in the first luminescence measurement and the second luminescence measurement in accordance with alternative A is not illuminated, in particular shaded, and the second illumination intensity is greater than 30 W per square meter, more preferably greater than 50 W per square meter, at most preferably greater than 1000 W per square meter.

4. Method according to claim 1 to 3,
**characterized in that**
in the evaluation step a current density (j) and/or a voltage (V) is determined at an operating point of the solar cell, wherein the current density (j) and the voltage (V) are dependent on the first intensity ($\phi_1$) and/or the second intensity ($\phi_2$).

5. Method according to claim 4,
**characterized in that**

the current density (j) and/or the voltage (V) is determined as a function of a first area ratio (f), which is dependent on a ratio between an area ($A_d$) of the first sub-region impinged on by excitation radiation or an area ($A_h$) of the second sub-region impinged on by excitation radiation and a quality-relevant total area (A) of the solar cell (1), in particular **in that**
the first sub-region is configured in the form of at least one first strip and the second sub-region is configured in the form of at least one second strip, wherein at least the first or the second strip is produced by projection due to the impingement of excitation radiation on the solar cell.

6. Method according to claim 4 or 5,
**characterized in that**
the total area (A) of the solar cell and preferably the area of the first sub-region ($A_d$) and the area of the second sub-region ($A_h$) are measured by an optical measuring device (11, 12), in particular a matrix or line camera (15), and the current density (j) is converted into a current intensity (I), and the power density (p) is converted into a power (P).

7. Method according to any one of claims 5 to 6,
**characterized in that**

at the latest after the first and second luminescence measurements, a parameter variation and/or an area variation is performed, in addition to the first and second luminescence measurement at least one third luminescence measurement is performed, wherein a third intensity $\phi_3$ of luminescent radiation emitted by the solar cell (1) is measured, and wherein the third luminescence measurement is carried out according to the first luminescence measurement or the second luminescence measurement in accordance with alternative A or B, wherein the third luminescence measurement is carried out with a fifth set of parameters, different from the first and/or the second luminescence measurement, and/or with a second area ratio, and in the evaluation step a current density curve, in particular a current density-voltage characteristic curve, preferably a current-voltage characteristic curve, most preferably a maximum power point, is determined, which is incorporated into the quality information.

8. Method according to claim 7,
**characterized in that**
the parameter variation comprises at least one intensity variation, such that the fifth set of parameters differs from at least one set of parameters of the first and/or second luminescence measurement in terms of at least one intensity, such that a series resistance-free Suns-$V_{oc}$ characteristic curve is at least partly determined, and an area-related series resistance of the solar cell is determined as a function of the first intensity and the second or third intensity, and preferably a current-voltage characteristic curve is determined as a function of the series resistance and the series resistance-free Suns-$V_{oc}$ characteristic curve.

9. Method according to any one of the preceding claims,
**characterized in that**
in addition to the first and second luminescence measurements, a contactless reflection measurement occurs on the solar cell (1), wherein the solar cell is impinged on by excitation radiation with multiple wavelengths and a radiation reflected by the solar cell is measured, as a function of which a wavelength-dependent degree of reflection or a spectral reflection is determined, and, in the evaluation step, the quality information is determined as a function of the first intensity, the second intensity and the spectral reflection.

10. Method according to claim 9,
**characterized in that**
in the evaluation of the quality information, a mathematical model is adapted to the spectral reflection by means of a parameterization and a wavelength-dependent generation proportion of the excitation radiation incident on the solar cell is calculated and the wavelength-dependent generation proportion is subjected to mathematical convolution with an excitation spectrum and a generation current density $j_{gen}$ is determined therefrom.

11. Method according to claim 9 or 10,
**characterized in that**
wherein during the reflection measurement the excitation radiation is generated and/or the reflected radiation is captured at least partly by means of an Ulbricht sphere, and a spectrometer captures at least the reflected radiation and outputs a spectral reflection, which is subjected to mathematical convolution with an excitation spectrum of the excitation radiation in the evaluation step, in order to determine a reflected photon flux, such that the quality information is dependent on the reflected photon flux.

12. Method according to any one of claims 9 to 11,
**characterized in that**
in the reflection measurement, the excitation radiation is generated at least partly by means of a diode, preferably a dome illumination with multiple diodes, and an optical measuring device, preferably the optical measuring device according to claim 7, which detects the reflected radiation, with which reflected radiation a spectral reflection is determined, and a reflected photon flux is determined by means of a calibration of the optical measuring device.

13. Method according to claim 7 and any one of claims 9 to 12,
**characterized in that**
the parameter variation comprises at least one wavelength variation, so that the fifth set of parameters in the third luminescence measurement differs in at least one wavelength, preferably a wavelength range, from at least one set of parameters of the first and second luminescence measurement and in the evaluation step a wavelength-dependent absolute internal quantum efficiency (aIQE) is calculated as a function of a relative external quantum efficiency (rEQE) and the spectral reflection, wherein for at least one varied wavelength, preferably for a varied wavelength range, a value for the absolute internal quantum efficiency is predetermined and, preferably, the absolute external quantum efficiency is determined on the basis of the absolute internal quantum efficiency, as a function of which the generation current density is preferably determined.

14. Method according to any one of the preceding claims,
    **characterized in that**
    the evaluation of the quality information in the evaluation step uses a model equation and/or a prediction model in order to determine the quality information.

15. Device for contactlessly assessing a quality of a solar cell (1), with a first measurement configuration (7, 13, 19, 20) and a second measurement configuration (7, 13, 19, 20), wherein the device in the first measurement configuration (7, 13, 19, 20) is configured to shade a first sub-region of the solar cell (1), or by means of a radiation source with excitation radiation in accordance with a first set of parameters, and to cause excitation radiation to impinge on a second sub-region of the solar cell (1) in accordance with a second set of parameters, different from the first set of parameters, and to measure a first intensity ($\phi_1$) of luminescent radiation emitted by the solar cell (1) in the first sub-region or in the second sub-region by means of a detector device (11, 12), and wherein the device in the second measurement configuration is configured, by means of the radiation source, to cause excitation radiation to impinge on the second sub-region of the solar cell (1) in accordance with a third set of parameters, different from the first set of parameters, and to shade the first sub-region of the solar cell (1) or to expose it to excitation radiation in accordance with the first set of parameters and to measure a second intensity ($\phi_2$) in the sub-region, which is different in each case in relation to the first measurement configuration, by means of the detector device (11, 12), or wherein the device in the second measurement configuration is configured by means of the radiation source to impinge on the solar cell (1) in the first and second sub-regions homogeneously with excitation radiation in accordance with a fourth set of parameters, and the detector device (11, 12) is configured to measure the second intensity in the first sub-region and/or the second sub-region, and wherein the detector device (11, 12) is connected to a computer unit for signaling, wherein the computer unit is configured to determine global, location-independent quality information as a function of the first intensity and the second intensity.

**Revendications**

1. Procédé d'évaluation sans contact de la qualité d'une cellule solaire (1), pour lequel une première mesure de luminescence est effectuée, dans lequel une première zone partielle de la cellule solaire (1) est exposée à un rayonnement d'excitation selon un premier ensemble de paramètre et une deuxième zone partielle de la cellule solaire (1) est exposée à un rayonnement d'excitation selon un deuxième ensemble de paramètre différent du premier ensemble de paramètre et une première intensité ($\phi_1$) d'un rayonnement de luminescence émis par la cellule solaire (1) est mesurée dans la première zone partielle ou la deuxième zone partielle et

   au moins une deuxième mesure de luminescence est effectuée, dans lequel une deuxième intensité ($\phi_2$) d'un rayonnement de luminescence émis par la cellule solaire (1) est mesurée, dans lequel
   selon une alternative A, la première zone partielle de la cellule solaire (1) est exposée à un rayonnement d'excitation selon le premier ensemble de paramètre et la deuxième zone partielle de la cellule solaire (1) est exposée à un rayonnement d'excitation selon un troisième ensemble de paramètre différent du premier ensemble de paramètre et la deuxième intensité ($\phi_2$) est mesurée dans la zone partielle, dans laquelle la première intensité ($\phi_1$) n'est pas mesurée lors de la première mesure de luminescence.
   ou
   selon une alternative B, la cellule solaire (1) est exposée dans la première et la deuxième zone partielle à un rayonnement d'excitation selon un quatrième ensemble de paramètre et la deuxième intensité ($\phi_2$) est mesurée dans la première zone partielle et/ou la deuxième zone partielle et dans une étape d'évaluation, une information de qualité globale indépendante du lieu est déterminée en fonction de la première intensité ($\phi_1$) et la deuxième intensité ($\phi_2$).

2. Procédé selon la revendication 1,
   **caractérisé en ce que**
   la première mesure de luminescence comprend une première mesure individuelle, pour laquelle la première intensité est mesurée indépendamment du lieu dans la première ou la deuxième zone partielle, et **en ce que** la deuxième mesure de luminescence comprend une deuxième mesure individuelle, pour laquelle la deuxième intensité est mesurée indépendamment du lieu et selon l'alternative A dans la zone partielle, dans laquelle la première intensité n'a pas été mesurée, ou selon l'alternative B est mesurée dans la première zone partielle et/ou la deuxième zone partielle, dans lequel la première et la deuxième intensité se présentent respectivement comme valeur d'intensité indépendante du lieu et l'information de qualité est déterminée comme information de qualité indépendante du lieu sur la cellule solaire entière.

3.  Procédé selon la revendication 1 ou 2,
    **caractérisé en ce que**
    le premier ensemble de paramètre comprend une première intensité d'éclairage et le deuxième et/ou troisième et/ou quatrième ensemble de paramètre comprennent respectivement au moins une deuxième intensité d'éclairage et la première intensité d'éclairage se distingue de la deuxième intensité d'éclairage, dans lequel la première intensité d'éclairage s'élève de préférence à 0 watt par mètre carré de sorte que la première zone partielle ne soit pas éclairée, en particulier soit masquée lors de la première mesure de luminescence et lors de la deuxième mesure de luminescence selon l'alternative A et la deuxième intensité d'éclairage est supérieure à 30 watts par mètre carré, de préférence encore supérieure à 50 watts par mètre carré, de manière préférée entre toutes supérieure à 1 000 watts par mètre carré.

4.  Procédé selon les revendications 1 à 3,
    **caractérisé en ce que**
    dans l'étape d'évaluation, une densité de courant (j) et/ou une tension (V) est déterminée en un point de travail de la cellule solaire, dans lequel la densité de courant (j) et la tension (V) dépendent de la première intensité ($\phi_1$) et/ou de la deuxième intensité ($\phi_2$).

5.  Procédé selon la revendication 4,
    **caractérisé en ce que**

    la densité de courant (j) et/ou la tension (V) est déterminée en fonction d'un premier rapport de surface (f) qui dépend d'un rapport d'une surface exposée à un rayonnement d'excitation ($A_d$) de la première zone partielle ou d'une surface exposée à un rayonnement d'excitation ($A_h$) de la deuxième zone partielle à une surface entière (A) pertinente pour la qualité de la cellule solaire (1) en particulier **en ce que**
    la première zone partielle est configurée sous la forme d'au moins une première bande et la deuxième zone partielle sous la forme d'au moins une seconde bande, dans lequel au moins la première ou la seconde bande est générée par la projection à la suite de l'exposition de la cellule solaire à un rayonnement d'excitation.

6.  Procédé selon la revendication 4 ou 5,
    **caractérisé en ce que**
    la surface entière (A) de la cellule solaire ainsi que de préférence la surface de la première zone partielle ($A_d$) et la surface de la deuxième zone partielle ($A_h$) sont mesurées avec un dispositif de mesure (11, 12) optique, en particulier une caméra matricielle ou linéaire (15) et la densité de courant (j) est convertie en une intensité de courant (I), ainsi que la densité de puissance (p) en une puissance (p).

7.  Procédé selon l'une quelconque des revendications 5 à 6,
    **caractérisé en ce que**
    au plus tard après la première et la deuxième mesure de luminescence, une variation de paramètre et/ou une variation de surface sont effectuées et outre la première et deuxième mesure de luminescence, au moins une troisième mesure de luminescence sont effectuées, dans lequel une troisième intensité $\phi_3$ d'un rayonnement de luminescence émis par la cellule solaire (1) est mesurée, et dans lequel la troisième mesure de luminescence est effectuée selon la première mesure de luminescence ou la deuxième mesure de luminescence selon l'alternative A ou B, dans lequel la troisième mesure de luminescence est effectuée avec un cinquième ensemble de paramètre différent par rapport à la première et/ou la deuxième mesure de luminescence et/ou un deuxième rapport de surface, et dans l'étape d'évaluation, une étendue de densité de courant, en particulier une ligne caractéristique de tension et densité de courant, de préférence une ligne caractéristique de tension et courant, le plus préférentiellement un point de puissance maximum est déterminé, lesquels s'intègrent dans l'information de qualité.

8.  Procédé selon la revendication 7,
    **caractérisé en ce que**
    la variation de paramètre comprend au moins une variation d'intensité de sorte que le cinquième ensemble de paramètre se distingue dans au moins une intensité d'au moins un jeu de paramètre de la première et/ou deuxième mesure de luminescence de sorte qu'une ligne caractéristique Suns-$V_{oc}$ exempte de résistance en série soit déterminée au moins partiellement et une résistance en série liée à la surface de la cellule solaire soit déterminée en fonction de la première intensité et de la deuxième ou troisième intensité et de préférence une ligne caractéristique de tension et courant est déterminée en fonction de la résistance en série et de la ligne caractéristique Suns-$V_{oc}$-exempte de résistance en série.

9. Procédé selon l'une quelconque des revendications précédentes,
**caractérisé en ce que**
outre la première et la deuxième mesure de luminescence, une mesure de réflexion sans contact sur la cellule solaire (1) est effectuée, dans lequel la cellule solaire est exposée à un rayonnement d'excitation avec une pluralité de longueurs d'onde et un rayonnement réfléchi par la cellule solaire est mesuré, en fonction duquel un degré de réflexion dépendant de la longueur d'onde ou une réflexion spectrale est déterminée, et dans l'étape d'évaluation, l'information de qualité est déterminée en fonction de la première intensité, de la deuxième intensité et de la réflexion spectrale.

10. Procédé selon la revendication 9,
**caractérisé en ce que**
lors de l'évaluation de l'information de qualité, un modèle mathématique est adapté au moyen d'un paramétrage à la réflexion spectrale et une part de génération dépendant de la longueur d'onde du rayonnement d'excitation incident sur la cellule solaire est calculée et la part de génération dépendant de la longueur d'onde est pliée mathématiquement avec un spectre d'excitation et une densité de courant de génération $j_{gen}$ est déterminée à partir de celle-ci.

11. Procédé selon la revendication 9 ou 10,
**caractérisé en ce que**
lors de la mesure de réflexion, la génération du rayonnement d'excitation et/ou la détection du rayonnement réfléchi est effectuée au moins partiellement au moyen d'une sphère d'Ulbricht et un spectromètre détecte au moins le rayonnement réfléchi et émet une réflexion spectrale qui est pliée mathématiquement dans l'étape d'évaluation avec un spectre d'excitation du rayonnement d'excitation afin de déterminer un courant de photons réfléchi de sorte que l'information de qualité soit dépendante du courant de photons réfléchi.

12. Procédé selon l'une quelconque des revendications 9 à 11,
**caractérisé en ce que**
lors de la mesure de réflexion, la génération du rayonnement d'excitation est effectuée au moins partiellement au moyen d'une diode, de préférence d'un éclairage en dôme avec une pluralité de diodes et un dispositif de mesure optique, de préférence le dispositif de mesure optique selon la revendication 7, détecte le rayonnement réfléchi, avec lequel rayonnement réfléchi, une réflexion spectrale est déterminée et détermine un courant de photons réfléchi au moyen d'un calibrage du dispositif de mesure optique.

13. Procédé selon la revendication 7 et l'une quelconque des revendications 9 à 12,
**caractérisé en ce que**
la variation de paramètre comprend au moins une variation de longueur d'onde de sorte que le cinquième ensemble de paramètre se distingue lors de la troisième mesure de luminescence dans au moins une longueur d'onde, de préférence une plage de longueur d'onde, d'au moins un ensemble de paramètre de la première et deuxième mesure de luminescence et dans l'étape d'évaluation, un calcul d'une efficacité quantique (aIQE) interne absolue dépendant de la longueur d'onde est effectué en fonction d'une efficacité quantique (rEQE) externe relative et de la réflexion spectrale, dans lequel pour au moins une longueur d'onde variée, de préférence pour une plage de longueur d'onde variée, une valeur est prédéfinie pour l'efficacité quantique interne absolue et de préférence l'efficacité quantique externe absolue est déterminée à partir de l'efficacité quantique interne absolue, en fonction de laquelle une densité de courant de génération est de préférence déterminée.

14. Procédé selon l'une quelconque des revendications précédentes,
**caractérisé en ce que**
l'évaluation de l'information de qualité à l'étape d'évaluation utilise une équation de modèle et/ou un modèle de prédiction afin de déterminer l'information de qualité.

15. Dispositif d'évaluation sans contact de la qualité d'une cellule solaire (1), avec une première configuration de mesure (7,13,19,20) et une deuxième configuration de mesure (7,13,19,20), dans lequel le dispositif est configuré dans la première configuration de mesure (7,13,19,20) afin de masquer une première zone partielle de la cellule solaire (1) ou d'exposer au moyen d'une source de rayon à un rayonnement d'excitation selon un premier ensemble de paramètre et d'exposer une deuxième zone partielle de la cellule solaire (1) à un rayonnement d'excitation selon un deuxième ensemble de paramètre différent du premier ensemble de paramètre et de mesurer au moyen d'un dispositif détecteur (11,12) une première intensité ($\phi_1$) d'un rayonnement de luminescence émis par la cellule solaire (1) dans la première zone partielle ou dans la deuxième zone partielle et dans lequel le dispositif est configuré dans la deuxième configuration de mesure afin d'exposer au moyen de la source de rayon la deuxième zone partielle de la cellule solaire (1) à un rayonnement d'excitation selon un troisième ensemble de paramètre différent du premier ensemble de paramètre et de masquer la première zone partielle de la cellule solaire (1) ou d'exposer à un rayonnement d'excitation selon la premier ensemble de paramètre et de mesurer une deuxième intensité ($\phi_2$) au moyen du dispositif détecteur (11, 12) dans l'autre zone partielle respectivement par rapport à la première configuration de mesure, ou dans lequel le dispositif est configuré dans la deuxième configuration de mesure afin d'exposer au moyen de la source de rayon la cellule solaire (1) dans la première et deuxième zone partielle de manière homogène à un rayonnement d'excitation selon un quatrième ensemble de paramètre et le dispositif détecteur (11,12) est configuré afin de mesurer la deuxième intensité dans la première zone partielle et/ou la deuxième zone partielle, et dans lequel le dispositif détecteur (11,12) est relié en signal à une unité de calcul, dans lequel l'unité de calcul est configurée afin de déterminer une information de qualité globale indépendante du lieu en fonction de la première intensité et de la deuxième intensité.

Figur 1

Figur 2

7

8

9

12

$\Phi_2$

$A_h$

11

10

$\Phi_1$

$A_d$

1

Figur 3

13

14

15

$\Phi_2$
$\Phi_1$

$A_{h1}$  $A_{d1}$  $A_{d2}$  $A_{d3}$

1

$A_{h2}$  $A_{h3}$  $A_{h4}$

Figur 4

1A

$A_{d1}$ $A_{d2}$ $A_{d3}$ $A_{d4}$ $A_{d5}$ $A_{d6}$

16

$A_{h1}$ $A_{h2}$ $A_{h3}$ $A_{h4}$ $A_{h5}$

1B

$A_{d1}$ $A_{d2}$ $A_{d3}$

17 16 $A_{h1}$ $A_{h2}$ $A_{h3}$

Figur 5

Figur 6

Figur 7

Figur 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2017237396 A1

- EP 2245473 B1

**In der Beschreibung aufgeführte Nicht-Patentliteratur**

- **P. A. BASORE**. Extended spectral analysis of internal quantum efficiency. *Conference Record of the Twenty Third IEEE Photovoltaic Specialists Conference*, 1993, 147-152
- **FELL, ANDREAS** ; **WIRTZ, WIEBKE** ; **HÖFFLER, HANNES** ; **GREULICH, JOHANNES**. *Determining the Generation Rate of Silicon Solar Cells from Reflection and Transmission Measurements by Fitting an Analytical Optical Model*, 2019, 3037-3041

- **K. O. DAVIS et al.** Electroluminescence Excitation Spectroscopy: A Novel Approach to Non-Contact Quantum Efficiency Measurements. *2017 IEEE 44th Photovoltaic Specialist Conference (PVSC)*, 2017, 3448-3451
- **WASMER, SVEN** ; **ANDREAS A. BRAND** ; **JOHANNES M. GREULICH**. Metamodeling of numerical device simulations to rapidly create efficiency optimization roadmaps of monocrystalline silicon PERC cells. *Energy Procedia*, 2017, vol. 124, 207-214